# EUROPEAN PATENT SPECIFICATION

(11) **EP 2 272 211 B1**
(45) Date of publication and mention of the grant of the patent: **13.02.2013**
(21) Application number: 08774950.3
(22) Date of filing: 09.07.2008
(51) Int. Cl.: H04W 36/26, H04W 36/08

(54) **HANDOVER BASED ON PREDICTION INFORMATION FROM THE TARGET NODE**
HANDOVER AUF DER BASIS VON PRÄDIKTIONSINFORMATIONEN AUS DEM ZIELKNOTEN
TRANSFERT BASÉ SUR DES INFORMATIONS PRÉVISIONNELLES PROVENANT DU NUD CIBLE

(30) Priority: 05.02.2008 US 25902
(43) Date of publication of application: 12.01.2011
(73) Proprietor: Telefonaktiebolaget L M Ericsson (publ), 164 83 Stockholm (SE)
(72) Inventor: VOLTOLINA, Elena, S-177 71 Järfälla (SE); FODOR, Gabor, S-165 52 Hässelby (SE)
(74) Representative: Kühn, Friedrich Heinrich
(86) International application number: PCT/EP2008/058946
(87) International publication number: WO 2009/097906

(56) References cited:
- WO-A-2008/002092
- US-A1- 2007 258 406
- US-A1- 2007 293 224

## Description

### TECHNICAL FIELD

Embodiments described herein relate generally to wireless networks, and more particularly, to making handover decisions based on prediction information from a target node in a wireless network.

### BACKGROUND

Traditionally, admission control at handover is exercised by a target cell based on Quality of Service (QoS) requirements of a radio bearer(s) of user equipment (UE) and the target cell's resource situation. To this end, the cellular standards specify signaling messages between base stations and/or the associated radio network controllers that allow radio bearer information to be conveyed from one cell to another. For radio bearers with no QoS guarantees (i.e., without a Guaranteed Bit Rate (GBR)), the target cell does not exercise admission control. In fact, non-GBR radio bearers are always admitted upon handover by the target cell and subsequently treated on a best effort basis (i.e.. without reserving radio, transport. hardware/software, and/or other types of resources).

For example, in the Evolved Universal Terrestrial Radio Access Network (E-UTRAN), during Handover Preparation, a source base station (called an evolved Node B (eNB)) can convey radio bearer-specific Radio Resource Management (RRM) information to a target base station (eNB) over an X2 interface. The radio bearer-specific RRM information may include information relating to past and current radio resource usage of particular user equipment (UE).

The target base station does not. however, take into account the actual resource need(s) of the newly arriving UE and does not reserve resources for best effort services. As such, the present typical so called "best effort" scheme is in fact not a best effort in the sense that the perceived QoS and the provided radio resources are not maximized for the UE that is handed over to the target base station. This is because the target base station uses the available signaled QoS parameters associated with the radio bearers of the UE (which may be limited to the currently standardized QoS parameters).

Thus, the source base station may direct a UE to a target cell that is not able to provide the appropriate service level for ongoing sessions associated with the particular UE. For example, if a UE is using non-GBR (best effort) services, a target cell with limited resources may be selected for handover even when another target cell with an abundance of resources could accommodate the UE.

US 2007/258406 A1 discloses a method for carrying out a handover including sending and handover request to a target node, where said handover request includes information regarding signal strength and traffic load.

### SUMMARY

It is an object of the invention to overcome at least some of the above disadvantages and to provide improved handover processing.

Embodiments described herein include systems and methods that predict the likelihood of a UE receiving the same quality of service at a target node, after handover, that the UE is currently receiving as the source node. The source node gathers current activity and resource usage information about individual UEs (called UE-specific RRM information) that provide more fine grained information than the associated radio bearer parameters. This advantage may be applicable for both non-GBR and GBR bearers for which the maximum (or peak) bit rate is greater than the GBR (MBR>GBR). In the latter case, there may be a huge difference between a source cell and a target cell in terms of the actually supported bit rate (e.g., the source cell may be close to MBR, while the target cell may be close to GBR).

The target node can have more precise information and finer grained pieces of information about the actual resource requirements of the UE than what the target node can obtain from the radio bearer-specific RRM information alone. The target node can use this information to provide a prediction to the source node that indicates the likelihood of the UE receiving the same QoS in the new cell (i.e., the cell provided by the target node) after handover. The target node may also provide handover feedback information in case handover preparation fails. Thus, the source node's handover decisions may be helped with up-to-date information about the target node's resource situation, and not just by background load information which could be obsolete at the time of handover.

In one embodiment, the source node can send a warning pro-actively to UEs running best effort (non GBR) or elastic (MBR>GBR) applications. The warning may indicate that although the target node is able to commit to a minimum bit rate and QoS, degradation in the perceived QoS is likely to happen after handover execution. The UE can, for example, use this information in cross layer signaling to the application layer. As a result, the UE may have a higher chance of continuing to receive the service in a cell with resource issues, by reconfiguring (and adapting to the new resource situation) in due time prior to handover.

In an exemplary embodiment, a system described herein includes a source node to collect radio resource management (RRM) information, determine that a handover is to be initiated for user equipment (UE), and send, in response to the determination that a handover is to be initiated, a handover request message that includes the RRM information. The system further includes a target node to receive the handover request message from the source node, identify, in response to receiving the handover request message, current network information for the target node, generate handover feedback information for the UE based on the RRM information and the identified current network information, and send a handover response message to the source node. The handover response message includes the generated handover feedback information. The generated handover feedback information assists the source node in making a decision regarding the handover.

### BRIEF DESCRIPTION OF THE DRAWINGS

Fig. 1 is a diagram of an exemplary network 100 in which systems and methods described herein may be implemented;
Fig. 2 is a diagram of an exemplary implementation of the UE of Fig. 1;
Fig. 3 is a diagram of exemplary components of the UE of Fig. 2;
Fig. 4 is a diagram of exemplary components of the evolved Node B (eNB) of Fig. 1;
Fig. 5 is a diagram of exemplary computer-readable media that may be associated with the eNB of Fig. 1;
Fig. 6 is a diagram of exemplary components of the Mobility Management Entity (MME)/Gateway (GW) of Fig. 1;
Fig. 7 is a flowchart of an exemplary process for performing a handover;
Figs. 8A-11C are examples of the processing described above with respect to Fig. 7; and
Fig. 12 is a flowchart of another exemplary process for performing a handover.

### DETAILED DESCRIPTION

The following detailed description refers to the accompanying drawings. The same reference numbers in different drawings may identify the same or similar elements. Also, the following detailed description does not limit the invention.

Embodiments described herein provide improved handover in a wireless network. In one embodiment, a source node, in response to determining that a handover is to be initiated for UE, may transfer RRM information to a target node. The target node may use the RRM information, along with current network information associated with the target node, to generate handover feedback information for the UE. The target node may transfer the handover feedback information to the source node. The source node may use that handover feedback information as a prediction of the likelihood that the services currently running on the UE can be maintained with the same level of QoS in the new cell (i.e., the cell supported by the target node), after the handover.

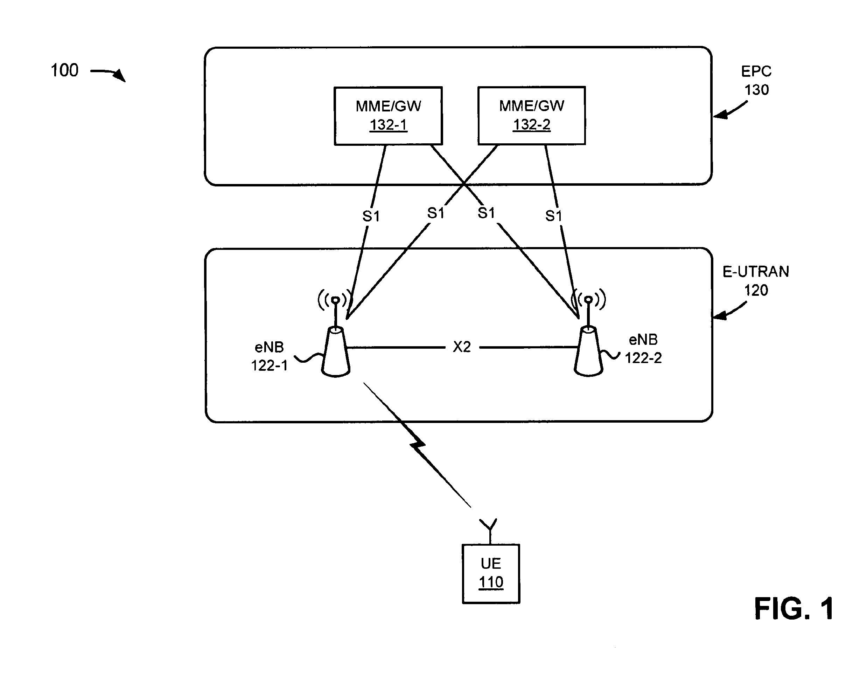

Fig. 1 is a diagram of an exemplary network 100 in which systems and methods described herein may be implemented. As illustrated, network 100 may include user equipment (UE) 110, an Evolved Universal Terrestrial Radio Access Network (E-UTRAN) 120, and an Evolved Packet Core (EPC) 130. The number of components illustrated in Fig. 1 is provided for simplicity. In practice, network 100 may include additional and/or different components than illustrated in Fig. 1.

UE 110 may include one or more devices capable of sending/receiving traffic (e.g.. voice and/or data) to/from E-UTRAN 120. In one embodiment. UE 110 may include, for example, a wireless telephone, a personal digital assistant (PDA), a laptop, etc.

E-UTRAN 120 may include a network, as defined, for example, in the 3rd Generation Partnership Project (3GPP) Technical Specification (TS) 36.300, via which UE 110 may communicate. As illustrated, E-UTRAN 120 may include a group of evolved Node Bs (eNBs) 122-1 to 122-2 (referred to collectively as "eNBs 122"). Two eNBs 122 have been illustrated for simplicity. In practice, there may be more eNBs.

eNBs 122 (also referred to as base stations) may include one or more devices that receive traffic (e.g., voice and/or data) from UE 110 via an air interface, and transmit traffic (e.g., voice and/or data) to UE 110 via the air interface. In one embodiment, eNB 122-1 may communicate with eNB 122-2 via an X2 interface.

EPC 130 may include a network that receives traffic (e.g., packet-switched traffic) from E-UTRAN 120 and forwards the traffic to another network, such as a Public Data Network (PDN) like the Internet, and receives traffic from the other network and forwards the traffic to E-UTRAN 120. As illustrated, EPC 130 may include a group of Mobility Management Entities (MMEs)/Gateways (GWs) 132-1 through 132-2 (referred to collectively as "MMEs/GWs 132"). Two MMEs/GWs 132 have been illustrated for simplicity. In practice, there may be more MMEs/GWs.

Each MME/GW 132-1 through 132-2 may include an MME and a GW. The MME may include one or more devices that manage mobility of UE 110. MME may further include one or more devices that perform authentication and authorization, idle-mode UE tracking and reachability, security negotiations, and Network-Architecture Specific (NAS) signaling. The GW may include one or more devices that receive/forward traffic from/to eNBs 122. The GW may further include one or more devices that act as interfaces to external PDNs. MME/GW 132-1 and MME/GW 132-2 may communicate with eNB 122-1 and eNB 122-2 via S 1 interfaces.

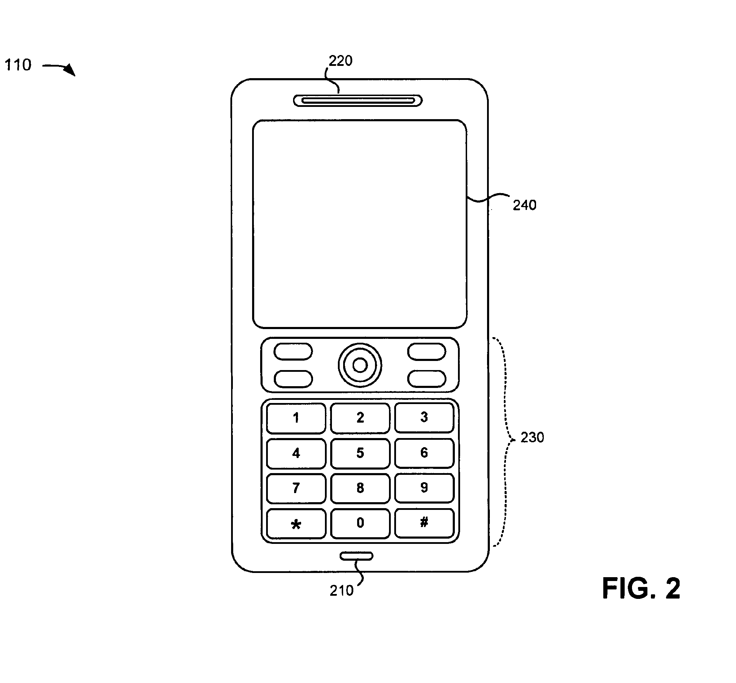

Fig. 2 is a diagram of an exemplary implementation of UE 110. In the example illustrated in Fig. 2. UE 110 is implemented as a cell phone. UE 110 may include a microphone 210, a speaker 220, a group of input elements 230, and a display 240.

Microphone 210 may receive audible information from a user of UE 110. Speaker 220 may provide audible information to a user of UE 110. Input elements 230 may include control buttons and/or a keypad. The control buttons may permit a user to interact with UE 110 to cause UE 110 to perform one or more operations. For example, the control buttons may be used to cause UE 110 to transmit information. The keypad may include a standard telephone keypad. Display 240 may provide visual information to a user. For example, display 240 may display text input into UE 110, text and/or graphics received from another device, such as eNB 122-1. and/or information regarding incoming or outgoing calls or text messages, media, games, phone books, address books, the current time, etc.

Although Fig. 2 shows exemplary components of UE 110, in other implementations. UE 110 may contain fewer, different, or additional components than depicted in Fig. 2. In still other implementations, one or more components of UE 110 may perform the tasks described as being performed by one or more other components of UE 110.

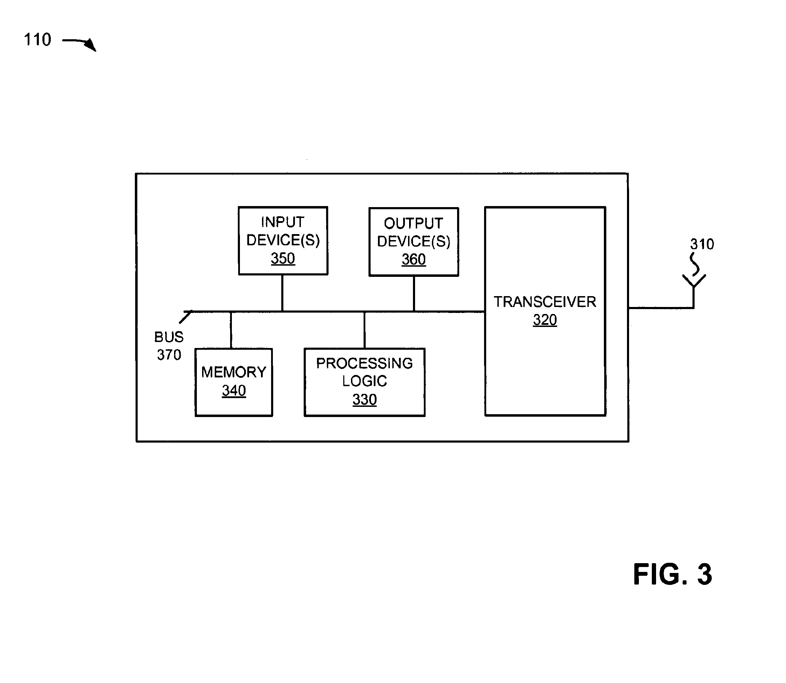

Fig. 3 is a diagram of exemplary components of UE 110 of Fig. 2. As illustrated, UE 110 may include an antenna 310, a transceiver 320, processing logic 330, a memory 340, an input device(s) 350, an output device(s) 360, and a bus 370.

Antenna 3 10 may include one or more antennas to transmit and/or receive radio frequency (RF) signals over the air. Antenna 310 may, for example, receive RF signals from transceiver 320 and transmit the RF signals over the air to eNB 122-1 and receive RF signals over the air from eNB 122-1 and provide the RF signals to transceiver 320.

Transceiver 320 may include, for example, a transmitter that may convert baseband signals from processing logic 330 to RF signals and/or a receiver that may convert RF signals to baseband signals. Alternatively, transceiver 320 may include a transceiver to perform functions of both a transmitter and a receiver. Transceiver 320 may connect to antenna 310 for transmission and/or reception of the RF signals.

Processing logic 330 may include a processor, microprocessor, an application specific integrated circuit (ASIC), field programmable gate array (FPGA), or the like. Processing logic 330 may control operation of UE 110 and its components.

Memory 340 may include a random access memory (RAM), a read only memory (ROM), and/or another type of memory to store data and instructions that may be used by processing logic 330. Input device(s) 350 may include mechanisms for entry of data into UE 110. For example, input device(s) 350 may include input mechanisms, such as microphone 210, input elements 230, display 240, etc. Output device(s) 360 may include mechanisms for outputting data in audio, video and/or hard copy format. For example, output device(s) 360 may include speaker 220. display 240, etc. Bus 370 may interconnect the various components of UE 110 to permit the components to communicate with one another.

Although Fig. 3 shows exemplary components of UE 110. in other implementations. UE 110 may contain fewer, different, or additional components than depicted in Fig. 3. In still other implementations, one or more components of UE 110 may perform the tasks described as being performed by one or more other components of UE 110.

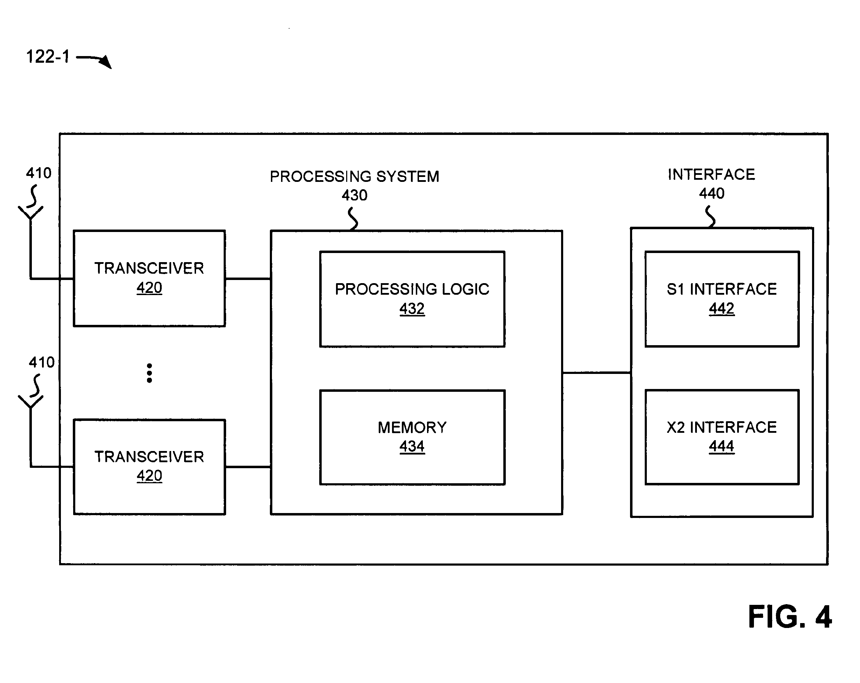

Fig. 4 is a diagram of exemplary components of eNB 122-1. eNB 122-2 may be similarly configured. As illustrated, eNB 122-1 may include antennas 410. transceivers 420, a processing system 430. and an interface 440.

Antennas 410 may include one or more directional and/or omni-directional antennas. Transceivers 420 may be associated with antennas 410 and include transceiver circuitry for transmitting and/or receiving symbol sequences in a network, such as network 100. via antennas 410.

Processing system 430 may control the operation of eNB 122-1. Processing system 430 may also process information received via transceivers 420 and interface 440. As illustrated, processing system 430 may include processing logic 432 and a memory 434. It will be appreciated that processing system 430 may include additional and/or different components than illustrated in Fig. 4.

Processing logic 432 may include a processor, microprocessor, an ASIC. FPGA. or the like. Processing logic 432 may process information received via transceivers 420 and interface 440. The processing may include, for example, data conversion, forward error correction (FEC), rate adaptation. Wideband Code Division Multiple Access (WCDMA) spreading/dispreading, and quadrature phase shift keying (QPSK) modulation, etc. In addition, processing logic 432 may generate control messages and/or data messages and cause those control messages and/or data messages to be transmitted via transceivers 420 and/or interface 440. Processing logic 432 may also process control messages and/or data messages received from transceivers 420 and/or interface 440. Memory 434 may include a RAM. a ROM, and/or another type of memory to store data and instructions that may be used by processing logic 432. Interface 440 may include one or more line cards that allow eNB 122-1 to transmit data to and receive data from other devices over wired and/or wireless connections. As illustrated, interface 440 may include an S1 interface 442 that allows eNB 122-1 to communicate, for example, with a MME/GW, such as MME/GW 132-1 and/or 132-2, and an X2 interface 444 that allows eNB 122-1 to communicate with another eNB. such as eNB 122-2.

eNB 122-1 may perform certain operations in response to processing logic 432 executing software instructions contained in a computer-readable medium, such as memory 434. A computer-readable medium may be defined as one or more physical and/or logical memory devices. The software instructions may be read into memory 434 from another computer-readable medium or from another device via interface 440. The software instructions contained in memory 434 may cause processing logic 432 to perform processes described herein. Alternatively, hardwired circuitry may be used in place of or in combination with software instructions to implement processes described herein. Thus, embodiments described herein are not limited to any specific combination of hardware circuitry and software.

Although Fig. 4 shows exemplary components of eNB 122-1, in other implementations, eNBs 122-1 may contain fewer, different, or additional components than depicted in Fig. 4. In still other implementations, one or more components of eNB 122-1 may perform the tasks described as being performed by one or more other components of eNB 122-1.

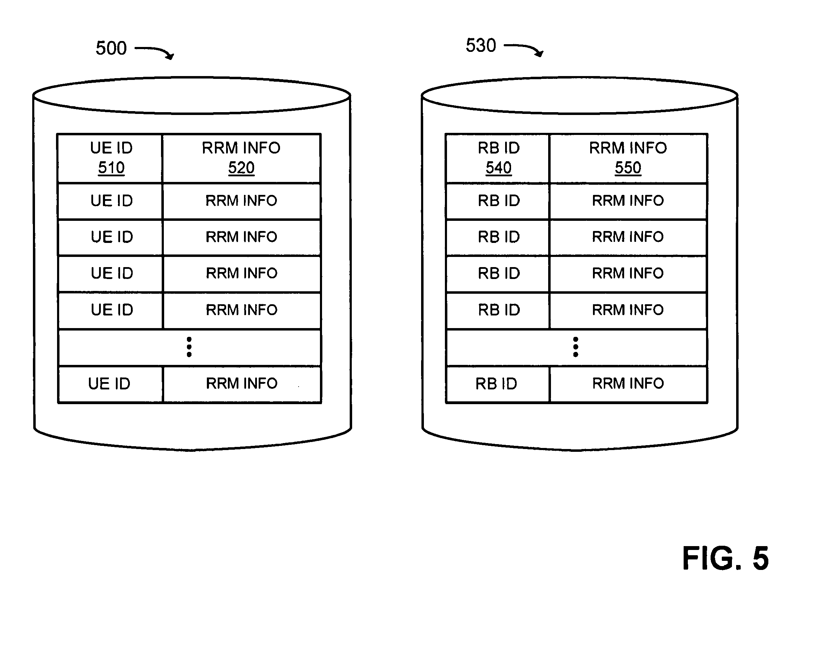

Fig. 5 is a diagram of exemplary computer-readable media 500 and 530 that may be associated with eNB3 122-1. It will be appreciate that similar computer-readable media may be associated with eNBs 122-2. While two computer-readable media are described below, it will be appreciated that computer-readable media 500 and 530 may include additional computer-readable media stored locally at eNB 122-1 (e.g.. in memory 434), or stored at one or more different and possibly remote locations.

As illustrated, computer-readable medium 500 may maintain a group of entries in the following exemplary fields: a UE identifier field 510 and a Radio Resource Management (RRM) Information (INFO) field 520. Computer-readable medium 500 may maintain additional or different information than illustrated in Fig. 5.

UE identifier field 510 may store a sequence of characters that identifies a UE, such as UE 110, associated with eNB 122-1. In one embodiment, the sequence of characters may be unique for that UE. For example, the sequence of characters may correspond to a network address. RRM INFO field 520 may store RRM information obtained by eNBs 122-1 for the UE identified in field 510. In one embodiment, the RRM information may include information relating to past and/or current radio resource usage of the particular UE. For example, the RRM information may include information relating to the UE's scheduled uplink/downlink traffic, received/transmitted power levels, used resource blocks in time and/or in frequency, applied discontinuous reception/transmission (DRX) settings, used radio resources, a perceived quality of service of the UE, and/or other types of information that might be useful by a target eNB in determining a handover prediction for the UE.

Computer-readable medium 530 may maintain a group of entries in the following exemplary fields: a Radio Bearer (RB) identifier field 540 and an RRM INFO field 550. Computer-readable medium 530 may maintain additional or different information than illustrated in Fig. 5.

RB identifier field 540 may store a sequence of characters that identities a radio bearer associated with eNB 122-1. In one embodiment, the sequence of characters may be unique for that radio bearer with respect to eNB 122-1. RRM INFO field 550 may store RRM information obtained by eNB 122-1 for the radio bearer identified in field 510. In one embodiment, the RRM information may include information relating to activity levels, used radio resource blocks per Transmission Time Interval (TT1), used power levels per resource blocks, and/or other types of information that might be useful by a target eNB in determining a handover prediction for the UE.

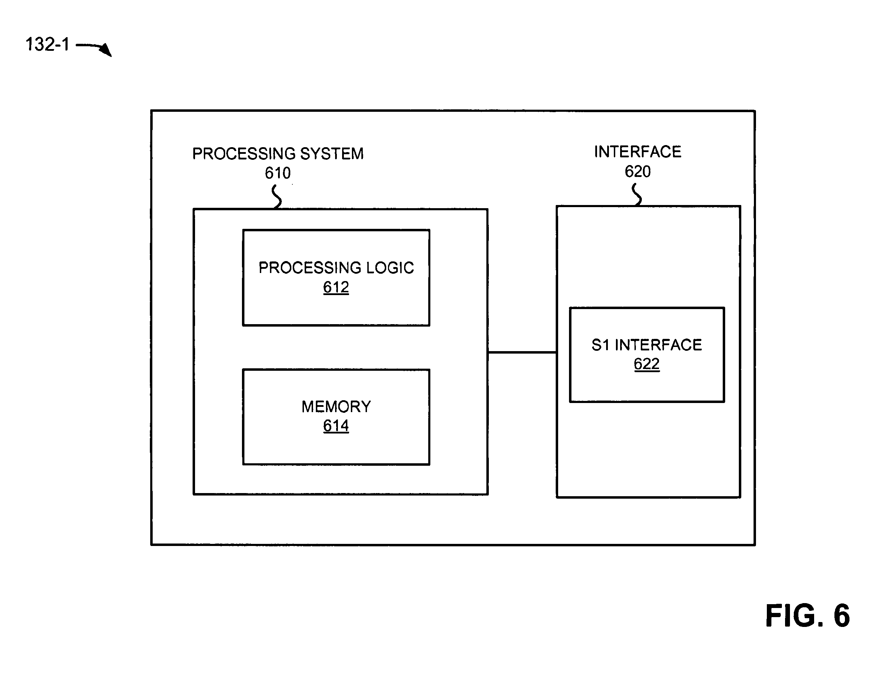

Fig. 6 is a diagram of exemplary components of MME/GW 132-1. MME/GW 132-2 may be similarly configured. As illustrated, MME/GW 132-1 may include a processing system 610 and an interface 620.

Processing system 610 may control the operation of MME/GW 132-1. Processing system 610 may also process information received via interface 620. As illustrated, processing system 610 may include processing logic 612 and a memory 614. It will be appreciated that processing system 610 may include additional and/or different components than illustrated in Fig. 6.

Processing logic 612 may include a processor, microprocessor, an ASIC, FPGA, or the like. Processing logic 612 may process information received via interface 620. In addition, processing logic 612 may generate control messages and/or data messages and cause those control messages and/or data messages to be transmitted via interface 620. Processing logic 612 may also process control messages and/or data messages received from interface 620. Memory 614 may include a RAM, a ROM, and/or another type of memory to store data and instructions that may be used by processing logic 612.

Interface 620 may include one or more line cards that allow MME/GW 132-1 to transmit data to and receive data from other devices over wired and/or wireless connections. As illustrated, interface 620 may include an S1 interface 622 that allows MME/GW 132-1 to communicate, for example, with an eNB, such as eNB 122-1 and/or eNB 122-2. It will be appreciated that interface 620 may include additional interfaces than illustrated in Fig. 6. For example, interface 620 may include an interface for communicating with another network, such as a PDN.

MME/GW 132-1 may perform certain operations in response to processing logic 612 executing software instructions contained in a computer-readable medium, such as memory 614. The software instructions may be read into memory 614 from another computer-readable medium or from another device via interface 620. The software instructions contained in memory 614 may cause processing logic 612 to perform processes described herein. Alternatively, hardwired circuitry may be used in place of or in combination with software instructions to implement processes described herein. Thus, embodiments described herein are not limited to any specific combination of hardware circuitry and software.

Although Fig. 6 shows exemplary components of MME/GW 132-1. in other implementations, MME/GW 132-1 may contain fewer, different, or additional components than depicted in Fig. 6. In still other implementations, one or more components of MME/GW 132-1 may perform the tasks described as being performed by one or more other components of MME/GW 132-1.

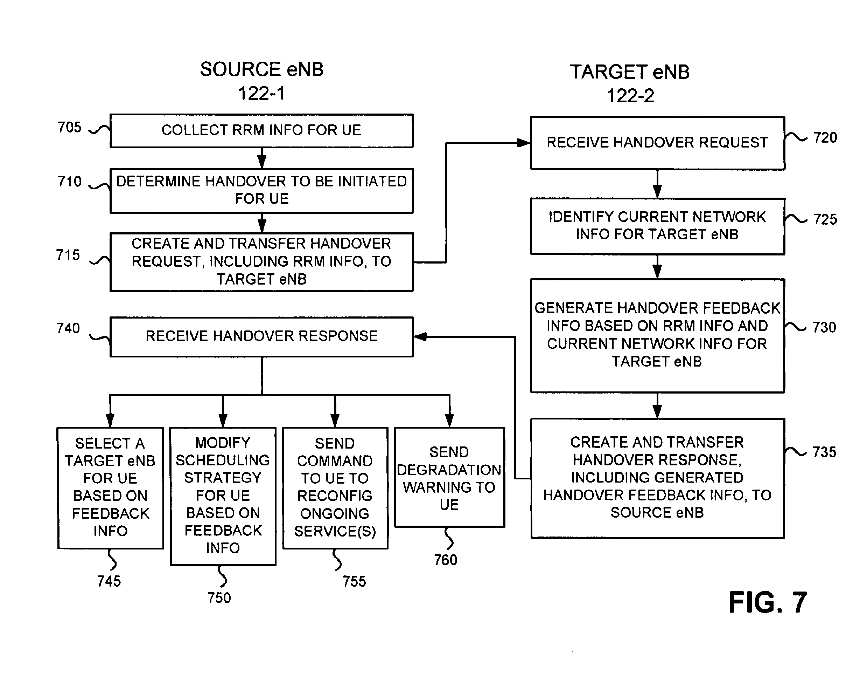

Fig. 7 is a flowchart of an exemplary process for performing a handover. In one embodiment, the processing described in Fig. 7 may be performed by eNB 122-1 (e.g., as a source eNB sewing a UE 110 via one or more non-Guaranteed Bit Rate (non-GBR) radio bearers or one or more GBR radio bearers for which the supported Maximum Bit Rate (MBR) is greater than the guaranteed bit rate) and eNB 122-2 (e.g., as a target eNB). In another embodiment, some or all of the exemplary process described below may be performed by another device or combination of devices, including or excluding eNBs 122.

The exemplary process may begin with source eNB 122-1 collecting RRM information (block 705). In one embodiment, source eNB 122-1 may collect RRM information that is specific to UE 110 and RRM information that is specific to the radio bearers associated with source eNB 122-1. For example, source eNB 122-1 may collect RRM information for UE 110 during the time that UE 110 stays within a cell associated with source eNB 122-1. The UE-specific RRM information may include, for example, information relating to past and/or current radio resource usage of UE 110. For example, the RRM information may include information relating to UE 110's scheduled uplink/downlink traffic, received/transmitted power levels, used resource blocks in time and/or in frequency, applied DRX settings, used radio resources, perceived quality of service of UE 110, and/or other types of information that might be useful by a target eNB in determining a handover prediction for UE 110. The radio bearer-specific RRM information may include, for example, information relating to activity levels of the radio bearers associated with UE 110, used radio resource blocks per TTI for the radio bearers, used power levels per resource blocks, and/or other types of information that might be useful by a target eNB in determining a handover prediction for UE 110. Source eNB 122-1 may store the UE-specific RRM information in a computer-readable medium, such as computer-readable medium 500. Source eNB 122-1 may further store the radio bearer-specific RRM information in a computer-readable medium, such as computer-readable medium 530.

Source eNB 122-1 may determine that a handover should be initiated for UE 110 (block 710). In one embodiment, source eNB 122-1 may determine that a handover should be initiated based on measurement reports. For example, source eNB 122-1 may command UE 110 to perform measurements, generate measurement reports, and transmit the measurement reports to source eNB 122-1. In other embodiments, source eNB 122-1 may determine that a handover should be initiated for UE 110 based on other information.

In response to determining that a handover should be initiated for UE 110, source eNB 122-1 may create a handover request message (block 715). The handover request message may include RRM information relating to UE 110 (e.g.. UE-specitic RRM information and/or radio bearer-specific RRM information). In one embodiment, the handover request message may include the HANDOVER REQUEST message defined in 3GPP TS 36.423. The RRM information may be provided, for example, in the UE History Information Element (IE) of the HANDOVER REQUEST message. Once created, source eNB 122-1 may transfer the handover request message to target eNB 122-2 (block 715). Source eNB 122-1 may transfer the handover request message over the X2 interface.

Target eNB 122-2 may receive the handover request (block 720) and, in response thereto, may identify current network information for target eNB 122-2 (block 725). In one embodiment, the current network information may include target eNB 122-2's current resource situation, such as information relating to target eNB 122-2's current capacity situation and/or current load situation.

Target eNB 122-2 may generate handover feedback information for UE 110 based on the RRM information received in the handover request and based on the identified current network information for target eNB 122-2 (block 730). The handover feedback information may include, for example, an indication that, based on the received RRM information and the identified current network information for target eNB 122-2, target eNB 122-2 may not be able to support the same activity level for UE 110 as source eNB 122-1. In one embodiment, the indication may be provided as a degradation level. For example, a "1" may indicate that there is low risk or degraded performance; a "2" may indicate that there is medium risk of degraded performance; and a "3" may indicate that there is a high risk of degraded performance, where source eNB 122-1 is strongly advised to modify activity levels of UE 110. if possible. In addition, the handover feedback information may identify the radio bearers that may receive less radio resources than provided by source eNB 122-1. Also, the handover feedback information may indicate the activity (e.g.. in terms of supported packet delay, throughput. etc.) that target eNB 122-2 may be able to support.

Target eNB 122-2 may create a handover response message (block 735). The handover response message may include the handover feedback information. In one embodiment, the handover response message may be created as the HANDOVER REQUEST ACKNOWLEDGE message defined in 3GPP TS 36.423. The HANDOVER REQUEST ACKNOWLEDGE message format may be modified, however, to include the handover feedback information generated by target eNB 122-2. For example, for each bearer in the System Architecture Evolution (SAE) Bearers Admitted List IE, target eNB 122-2 may include a Handover (IIO) Evaluation Assistance Data IE that includes the handover feedback information. Alternatively, the handover feedback information may be included within the Target-eNB-to-Source-eNB Transparent Container IE. Exemplary formats of the modified HANDOVER REQUEST ACKNOWLEDGE message (including the HO Evaluation Assistance Data IE as part of the SAE Bearers Admitted List IE) and the HO Evaluation Assistance Data IE are provided below in Tables 1 and 2, respectively.

**Table 1. HANDOVER REQUEST ACKNOWLEDGE MESSAGE**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.15 | | YES | reject |
| Old eNB UE X2AP ID | M | | INTEGER (0..4095) | eNB UE X2AP ID allocated at the old eNodeB | YES | reject |
| New eNB UE X2AP ID | M | | INTEGER (0..4095) | New eNB UE X2AP ID allocated at the new eNodeB | YES | reject |
| **SAE Bearers Admitted List** | O | | | | YES | ignore |
| > SAE Bearer Info | | 1 to <maxnoof SAEbearers > | | | EACH | ignore |
| >> SAE Bearer ID | M | | BIT STRING (SIZE (8)) | | - | - |
| >> UL GTP Tunnel Endpoint | O | | 9.2.1 | Target eNB tunnel endpoint. For delivery of UL PDUs | - | - |
| >> DL GTP Tunnel Endpoint | O | | 9.2.1 | Target eNB tunnel endpoint. For delivery of DL PDUs | - | - |
| >>HO Evaluation Assistance Data | O | | 9.2.x | HO feedback info to assist source eNB | | |
| **SAE Bearers Not Admitted List** | O | | | | YES | ignore |
| > SAE Bearer Info | | 1 to <maxnoof SAEbearers > | | | EACH | ignore |
| >> SAE Bearer ID | M | | BIT STRING (SIZE (8)) | | - | - |
| >> Cause | M | | 9.2.8 | | - | - |
| Target eNodeB to Source eNodeB Transparent Container | M | | OCTET STRING | It includes HO info for the UE | YES | ignore |

**Table 2. HO EVALUATION ASSISTANCE DATA IE**

| **IE/Group Name** | **Presence** | **Range** | **IE type and reference** | **Semantics description** |
|---|---|---|---|---|
| Performance Degradation Indication | O | | INTEGER (1..3) | Indication that the current UE activity level might not be supported in the target cell Degradation levels: 1: low risk of degraded performance: 2: medium risk of degraded performance: 3 : high risk of degraded performance, source eNB strongly advised to modify UE activity levels if possible: |

As an alternative to creating a HANDOVER REQUEST ACKNOWLEDGE message, target eNB 122-2 may create another type of message in response to receiving a handover request message. For example, target eNB 122-2 may create a handover response message that includes Mobility control information, as defined by 3GPP TS 36.331. An exemplary format of the Mobility control information (including the handover feedback information) is illustrated in Table 3 below.

**Table 3. MOBILITY CONTROL INFORMATION**

| **Name** | **Need** | **Multi** | **Type/ reference** | **Semantics description** | **Ver** |
|---|---|---|---|---|---|
| Target cell identity | MP | | <ref> | | |
| Carrier frequency | oc | | <ref> | | |
| Additional spectrum emission requirement | oc | | Integer (1..31) | Defined in [36.101] | |
| Semi-static common channel configuration information | OP | | <ref> | E.g. RACH parameters. May include dedicated preamble. If so, the split between dedicated and common preambles is also indicated (FFS if always included) | |
| End time dedicated preamble | OP | | | | |
| RRM Information | | | | RRM feedback information from target cell | |

Target eNB 122-2 may transfer the handover response message to source eNB 122-1 (block 735). Target eNB 122-2 may transfer the handover response message over the X2 interface.

Source eNB 122-1 may receive the handover response message (block 740). Source eNB 122-1 may parse the handover response message to identify the handover feedback information. Source eNB 122-1 may perform a number of actions based on the received handover feedback information. For example, source eNB 122-1 may determine, based on the handover feedback information received from target eNB 122-2, that another target eNB, for which prepared handover exists, is better suited for the handover (block 745). As a result, source eNB 122-1 may handover UE 110 to another, better-suited target eNB.

As another example, source eNB 122-1 may modify the scheduling strategy for which UE 110 communicates with source eNB 122-1 to adapt UE 110 to the resource capability of target eNB 122-2 (block 750). Thereafter, UE 110 may communicate with source eNB 122-1 according to the modified scheduling strategy. When the handover to target 122-2 occurs, the user associated with UE 110 may not notice degradation in performance.

As still another example, source eNB 122-1 may send a command to UE 110 to cause UE 110 to reconfigure one or more ongoing services (block 755). For example, assume

that user device 110 is currently being used to play an on-line game. Source eNB 122-1 may send a command to UE 110 that causes UE 110 to reconfigure one or more of the settings of the game (e.g., to consume less resources). Thus, UE 110 may perform actions where the lower layers of UE I 10's protocol stack (e.g., that part of the protocol stack that handles radio communication) interact with the upper layers of the protocol stack (e.g., the non-access stratum/service layer) to reconfigure one or more characteristics of the application being run on UE 110 (e.g., to consume less resources). When the handover to target eNB 122-2 occurs, the user associated with UE 110 may not notice degradation in service.

As yet another example, source eNB 122-1 may send a degradation warning to UE 110 (block 760). For example, source eNB 122-1 may cause a message to be displayed on UE 110 to warn the user that degradation in service is forthcoming. The message may further include one or more actions that the user may perform to reduce the amount of degradation of performance that the user will experience, such as changing one or more characteristics of an application currently running on UE 110.

It will be appreciated that source eNB 122-1 may perform a combination of the actions described above. Also, source eNB 122-1 may perform actions in addition to or as an alternative to those described above.

If target eNB 122-2 determines that the handover request cannot be accommodated (e.g., in response to receiving the handover request message in block 720), target eNB 122-2 may transmit a handover failure message to source eNB 122-1. The handover failure message may include the generated handover feedback information. In one embodiment, the handover failure message may be created as a HANDOVER PREPARATION FAILURE message, which includes the HO Evaluation Assistance Data IE. An exemplary format of the modified HANDOVER PREPARATION FAILURE message (including the HO Evaluation Assistance Data IE) is provided below in Table 4.

**Table 4. HANDOVER PREPARATION FAILURE MESSAGE**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.15 | | YES | **reject** |
| Old eNB UE X2AP ID | M | | INTEGER (0..4095) | eNB UE X2AP ID allocated at the old eNodeB | YES | reject |
| Cause | M | | 9.2.8 | | YES | ignore |
| HO Evaluation Assistance Data | O | | 9.2.x | HO feedback info to assist source eNB | YES | ignore |

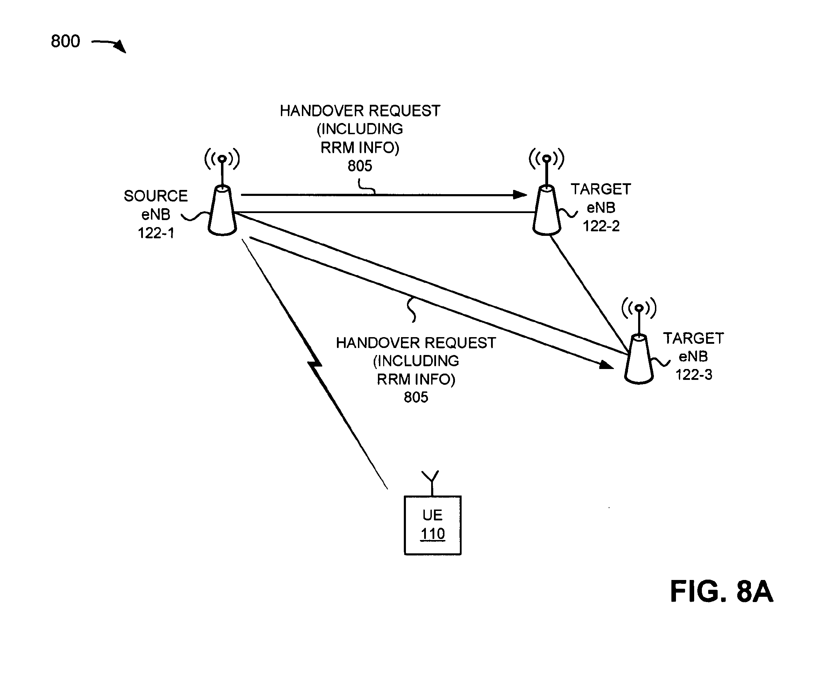

Figs. 8A-11C are examples of the processing described above with respect to Fig. 7. In each of the following examples, assume that a UE 110 is currently supported by a source eNB 122-1 and that source eNB 122-1 determines that a handover is to be initiated for UE 110.

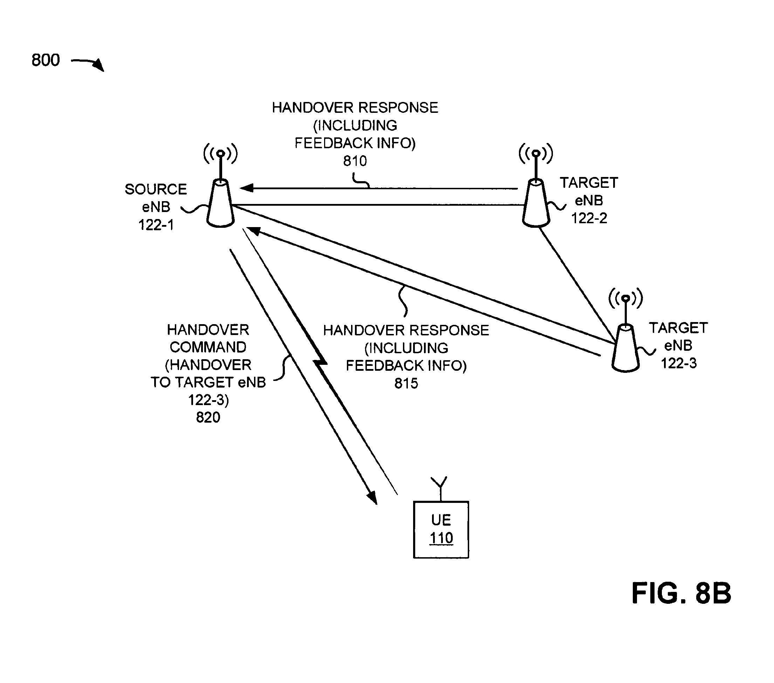

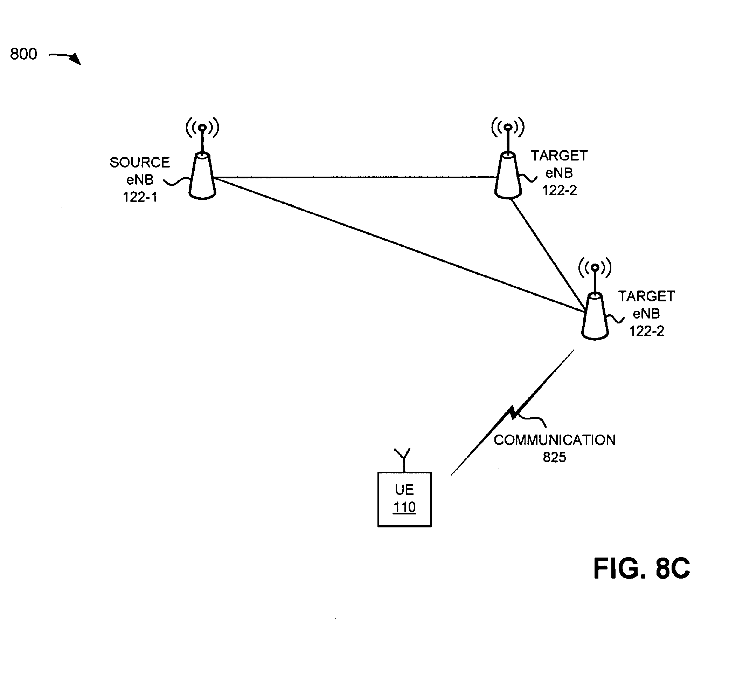

In a first example 800, illustrated in Fig. 8A, source eNB 122-1 may send handover requests 805 to possible target eNBs (denoted as target eNB 122-2 and target eNB 122-3 in example 800). Handover requests 805 may include RRM information (e.g., the UE-specific RRM information and the radio bearer-specific RRM information described above). Target eNBs 122-2 and 122-3 may receive handover requests 805 and may, based on the RRM information included in handover requests 805, generate handover feedback information. In example 800, assume that target eNB 122-2 generates handover feedback information that indicates that a high risk of degraded performance for UE 110 is likely if the handover to target eNB 122-2 is performed. Moreover, assume that target eNB 122-3 generates handover feedback information that indicates that a low risk of degraded performance for UE 110 is likely if the handover to target eNB 122-3 is performed. Target eNB 122-2 may transmit a handover response 810 that includes its feedback information to source eNB 122-1, as illustrated in Fig. 8B. Target eNB 122-3 may also transmit a handover response 815 that includes its feedback information to source eNB 122-1. In response to receiving handover responses 810 and 815, source eNB 122-1 may determine that, although a handover to both target eNB 122-2 and target eNB 122-3 are possible, a handover to target eNB 122-3 would be preferential, due to a likelihood of less degradation in performance experienced by the user of UE 110. Accordingly, source eNB 122-1 may transmit a handover command 820 to UE 110 to cause UE to begin communication 825 with target eNB 122-3. as illustrated in Fig. 8C.

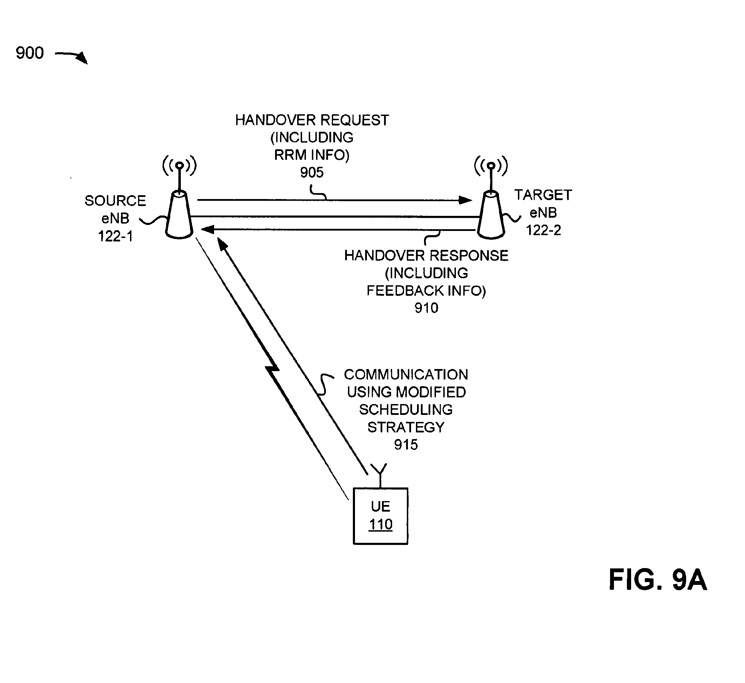

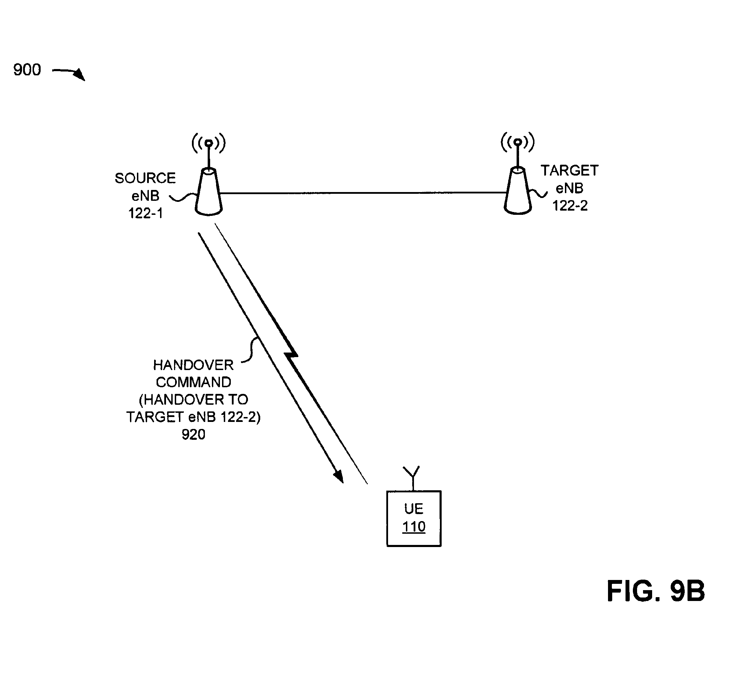

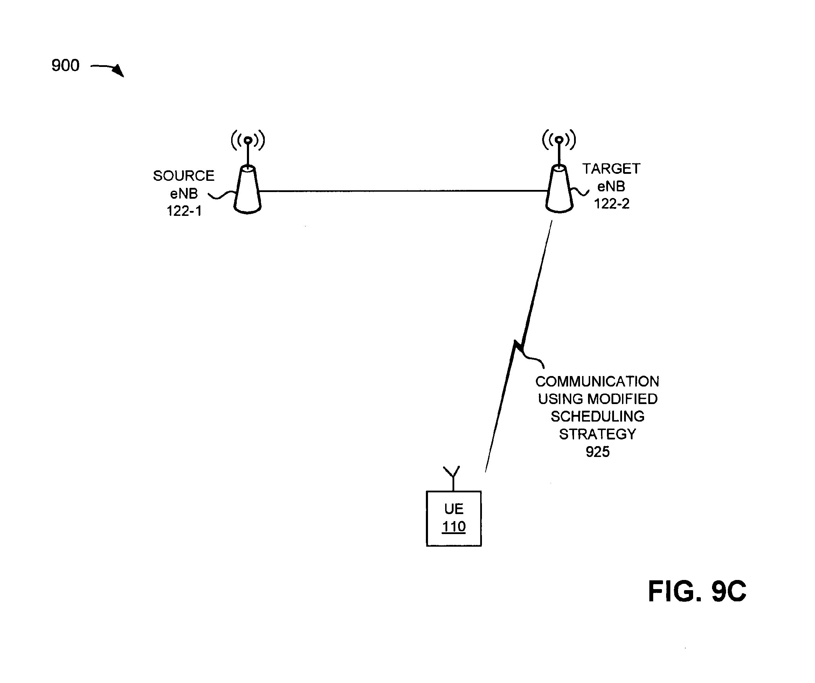

In a second example 900, illustrated in Fig. 9A, source eNB 122-1 may send a handover request 905 to target eNB 122-2. Handover request 905 may include RRM information (e.g., the UE-specific RRM information and the radio bearer-specific RRM information described above). Target eNB 122-2 may receive handover request 905 and may, based on the RRM information included in handover request 905. generate handover feedback information. In example 900. assume that target eNB 122-2 generates handover feedback information that indicates that a risk of degraded performance for UE 110 is likely if the handover to target eNB 122-2 is performed. Target eNB 122-2 may transmit a handover response 910 that includes the feedback information to source eNB 122-1. In response to receiving handover response 910, source eNB 122-1 may modify the scheduling strategy with which UE 110 communicates with source eNB 122-1. The modified scheduling strategy may be an attempt by source eNB 122-1 to adapt UE 110 to the communication performance that UE 110 will receive at target eNB 122-2. UE 110 may communicate 915 with source eNB 122-1 according to the modified scheduling strategy. Source eNB 122-1 may transmit a handover command 920 to UE 110 (Fig. 9B) to cause UE to begin communication 925 with target eNB 122-2 (e.g.. using the modified scheduling strategy), as illustrated in Fig. 9C.

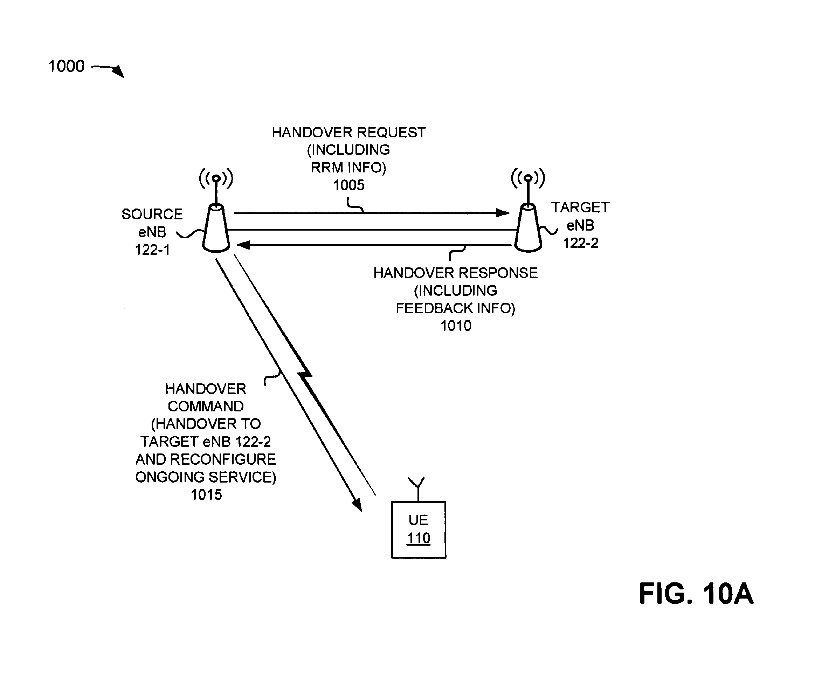

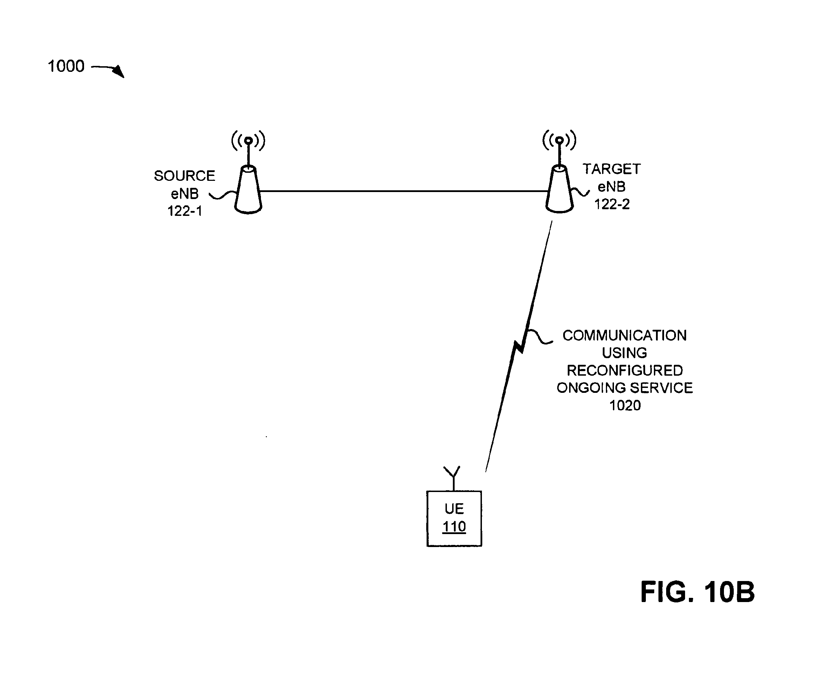

In a third example 1000, illustrated in Fig. 10A, source eNB 122-1 may send a handover request 1005 to target eNB 122-2. Handover request 1005 may include RRM information (e.g., the UE-specific RRM information and the radio bearer-specific RRM information described above). Target eNB 122-2 may receive handover request 1005 and may, based on the RRM information included in handover request 1005. generate handover feedback information. In example 1000, assume that target eNB 122-2 generates handover feedback information that indicates that a risk of degraded performance for UE 110 is likely if the handover to target eNB 122-2 is performed. Target eNB 122-2 may transmit a handover response 1010 that includes the feedback information to source eNB 122-1. In response to receiving handover response 1010, source eNB 122-1 may send a handover command 1015 to UE 110 that includes a command to cause UE 110 to reconfigure one or more ongoing services. For example, source eNB 122-1 may cause UE 110 to alter the settings of one or more applications currently running on UE 110 to, for example, cause the applications to consume less resources. As an alternative, the handover command may be separate from the command to cause UE 110 to reconfigure one or more ongoing services. In response to command 1015, UE 110 may reconfigure one or more ongoing services and begin communication 1020 with target eNB 122-2 (e.g., using the reconfigured ongoing service), as illustrated in Fig. 10B.

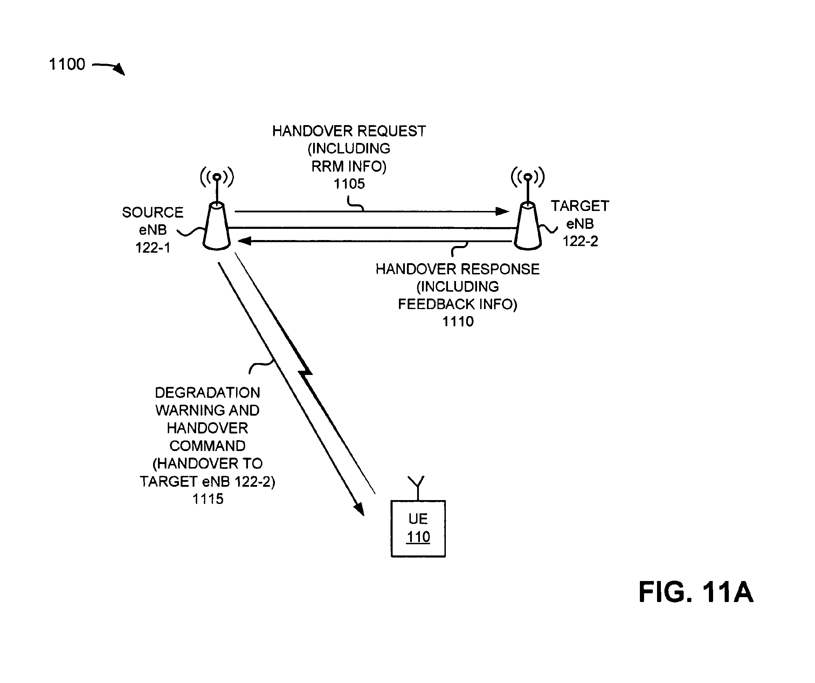

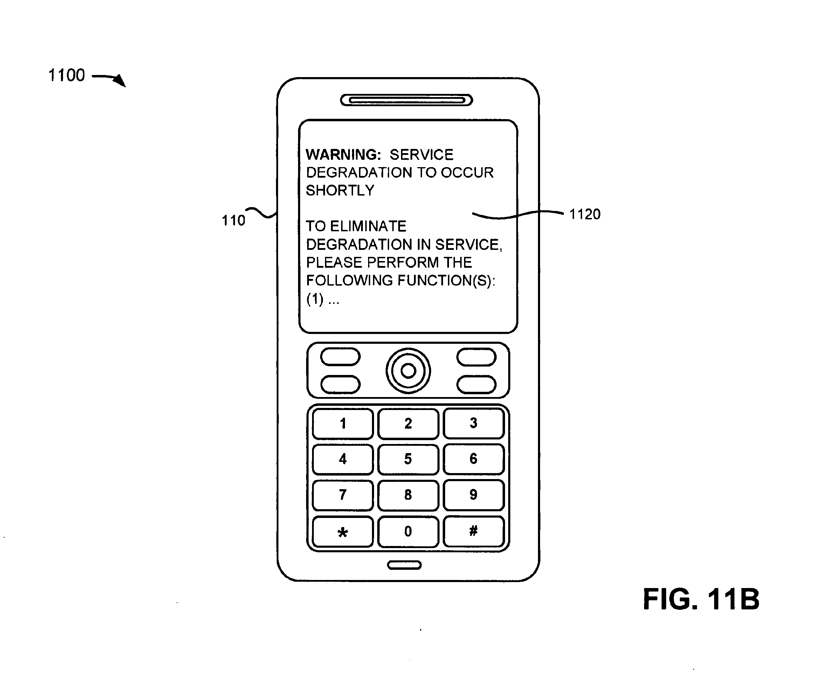

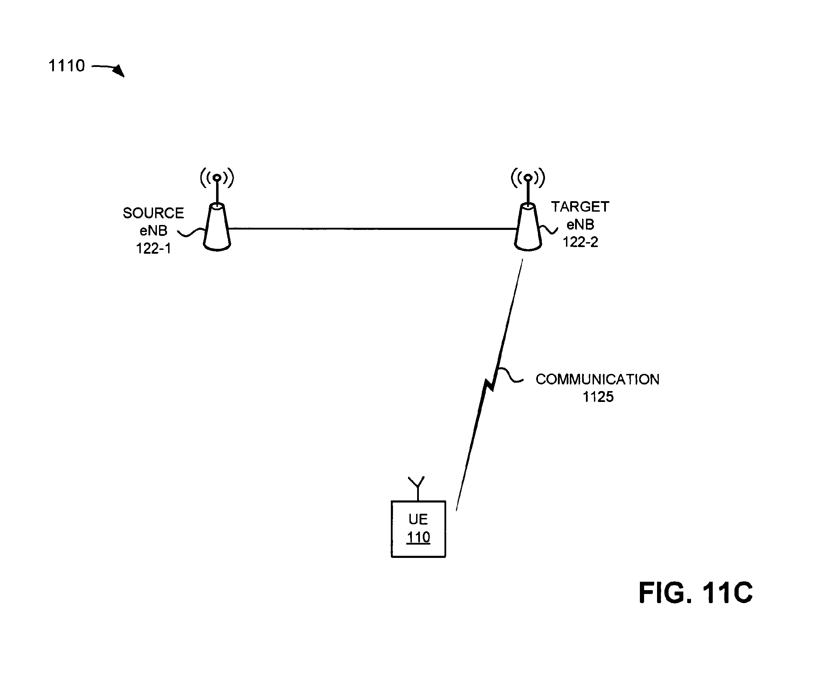

In a fourth example 1100, illustrated in Fig. 11A. source eNB 122-1 may send a handover request 1105 to target eNB 122-2. Handover request 1105 may include RRM information (e.g., the UE-specitic RRM information and the radio bearer-specific RRM information described above). Target eNB 122-2 may receive handover request 1105 and may, based on the RRM information included in handover request 1105, generate handover feedback information. In example 1100, assume that target eNB 122-2 generates handover feedback information that indicates that a risk of degraded performance for UE 110 is likely if the handover to target eNB 122-2 is performed. Target eNB 122-2 may transmit a handover response 1110 that includes the feedback information to source eNB 122-1. In response to receiving handover response 1110, source eNB 122-1 may send a degradation warning and handover command 1115 to UE 110. As an alternative, the handover command may be separate from the degradation warning. The degradation warning may cause a message 1120 to be displayed to a user associated with UE 110, as illustrated in Fig. 11B. Message 1120 may indicate that degradation in performance is likely and may, for example, indicate one or more actions that the user may perform to reduce the likelihood of degradation in performance. In response to the handover command, UE 110 may begin communication 1125 with target eNB 122-2, as illustrated in Fig. 11C (e.g., before or after the user performing the one or more actions).

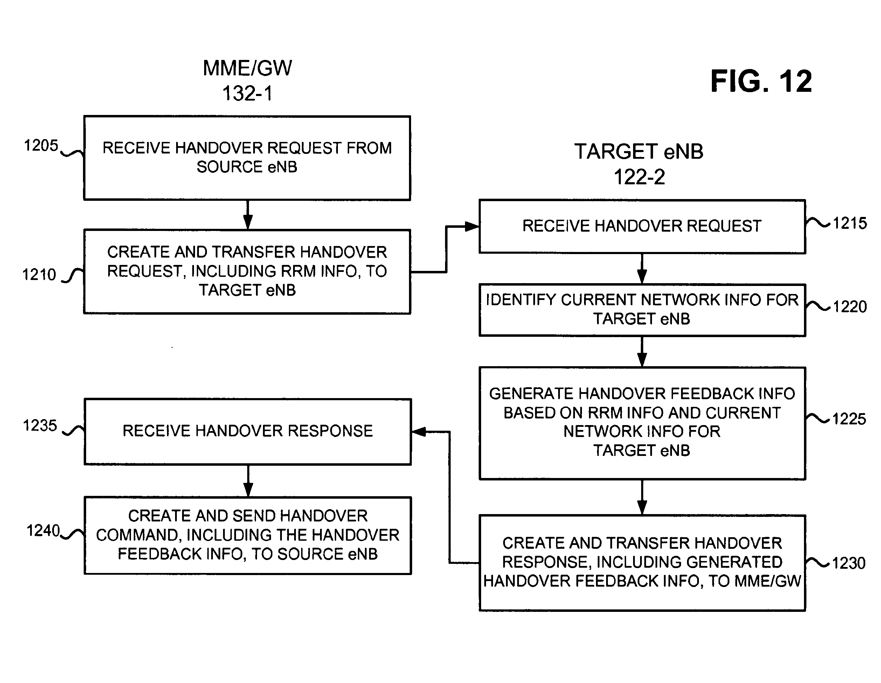

It will be appreciated that the techniques described above are equally applicable to other handover scenarios. For example, Fig. 12 is a flowchart of another exemplary process for performing a handover. In one embodiment, the processing described in Fig. 12 may be performed by MME/GW 132-1 and eNB 122-2 (e.g., as a target eNB). In another embodiment, some or all of the exemplary process described below may be performed by another device or combination of devices, including or excluding MME/GW 132-1 and eNB 122-2.

The exemplary process may begin with MME/GW 132-1 receiving a handover request message for a UE (assumed as UE 110) from a source eNB (assumed to be eNB 122-1) (block 1205). In one embodiment, the handover request message may include RRM information (e.g.. UE-specific RRM information and radio bearer-specific RRM information). The handover request message may include, for example, the HANDOVER REQUIRED message defined in 3GPP TS 36.413. MME/GW 132-1 may receive the handover request message over the S 1 interface.

MME/GW 132-1 may send a handover request message, which includes the RRM information, to target eNB 122-2 (block 1210). In one embodiment, the handover request message may include the HANDOVER REQUEST message defined in 3GPP TS 36.413. MME/GW 132-1 may transfer the handover request message over the S1 interface.

Target eNB 122-2 may receive the handover request message (block 1215) and, in response thereto, may identify current network information for target eNB 122-2 (block 1220). In one embodiment, the current network information may include target eNB 122-2's current resource situation, such as information relating to target eNB 122-2's current capacity situation and/or current load situation.

Target eNB 122-2 may generate handover feedback information for UE 110 based on the RRM information received in the handover request and based on the identified current network information for target eNB 122-2 (block 1225). The handover feedback information may include, for example, an indication that, based on the received RRM information and the identified current network information for target eNB 122-2, target eNB 122-2 may not be able to support the same activity level for UE 110 as source eNB 122-1. In one embodiment, the indication may be provided as a degradation level. For example, a "1" may indicate that there is low risk of degraded performance; a "2" may indicate that there is medium risk of degraded performance; and a "3" may indicate that there is a high risk of degraded performance, where source eNB 122-1 is strongly advised to modify activity levels of UE 110, if possible. In addition, the handover feedback information may identify the radio bearers that may receive less radio resources than provided by source eNB 122-1. Also, the handover feedback information may indicate the activity (e.g. in terms of supported packet delay, throughput, etc.) that target eNB 122-2 may be able to support.

Target eNB 122-2 may create a handover response message (block 1230). The handover response message may include the handover feedback information. In one embodiment, the handover response message may be created as the HANDOVER REQUEST ACKNOWLEDGE message defined in 3GPP TS 36.413. The HANDOVER REQUEST ACKNOWLEDGE message format may be modified in a manner similar to the manner described above to include the handover feedback information generated by target eNB 122-2.

Target eNB 122-2 may transfer the handover response message to MME/GW 132-1 (block 1230). Target eNB 122-2 may transfer the handover response message over the S I interface.

MME/GW 132-1 may receive the handover response message (block 1235). In response, MME/GW 132-1 may create a handover command based on the contents of the handover response message (block 1240). In one embodiment, the handover command may be created as a HANDOVER COMMAND message, as defined in 3GPP TS 36.413. The HANDOVER COMMAND message format may be modified in a manner similar to the manner described above with respect to the HANDOVER REQUEST ACKNOWLEDGE message to include the handover feedback information generated by target eNB 122-2. MME/GW 132-1 may send the handover command to source eNB 122-1 (block 1240). Upon receipt of the handover command from MME/GW 132-1, source eNB 122-1 may perform one or more of the actions described above with respect to Fig. 7.

Embodiments described herein may include systems and/or methods that predict the likelihood of a UE receiving the same quality of service at a target node, after handover, that the UE is currently receiving at the source node. The source node may gather current activity and resource usage information about individual UEs (called UE-specific RRM information) that provide more fine grained information than the associated radio bearer parameters. This advantage may be applicable for both non-GBR and GBR bearers for which the maximum (or peak) bit rate is greater than the GBR (MBR>GBR). As a result, the target node can have more precise information and finer grained pieces of information about the actual resource requirements of the UE than what the target node can obtain from the radio bearer-specific RRM information alone. The target node can use this information to provide a prediction to the source node that indicates the likelihood of the UE receiving the same QoS in the new cell (i.e.. the cell provided by the target node) after handover. The target node may also provide handover feedback information in case the handover preparation fails. Thus, the source node's handover decisions may be helped with up-to-date information about the target node's resource situation, and not just by background load information which could be obsolete at the time of handover.

In one embodiment, the source node can send a warning pro-actively to UEs running best effort (non GBR) or elastic (MBR>GBR) applications. The warning may indicate that although the target node is able to commit to a minimum bit rate and QoS, degradation in the perceived QoS is likely to happen after handover execution. The UE can, for example, use this information in cross layer signaling to the application layer. As a result, the UE may have a higher chance of continuing to receive the service in a cell with resource issues, by reconfiguring (and adapting to the new resource situation) in due time prior to handover.

Embodiments described herein provide illustration and description, but are not intended to be exhaustive or to limit the implementations to the precise form disclosed. Modifications and variations are possible in light of the above teachings, or may be acquired from practice of the embodiments. For example, while the techniques described above relate to providing handover feedback information from the target node to a source node during the handover execution, in other embodiments, the handover feedback information may be provided at other times (e.g., as part of a re-negotiation process).

White series of blocks have been described with regard to Figs. 7 and 12, the order of the blocks may be modified in other embodiments. Further, non-dependent blocks may be performed in parallel.

The exemplary embodiments, as described above, may be implemented in many different forms or software, firmware, and hardware in the embodiments illustrated in the figures. The actual software code or specialized control hardware used to implement the exemplary embodiments described herein is not limiting of the invention. Thus, the operation and behavior of the exemplary embodiments were described without reference to the specific software code - it being understood that one would be able to design software and control hardware to implement the exemplary embodiments based on the description herein.

Further, certain portions of the invention may be implemented as "logic" that performs one or more functions. This logic may include hardware, such as an application specific integrated circuit, a field programmable gate array, a processor, or a microprocessor, or a combination of hardware and software.

Even though particular combinations of features are recited in the claims and/or disclosed in the specification, these combinations are not intended to limit the invention. In fact, many of these features may be combined in ways not specifically recited in the claims and/or disclosed in the specification.

It should be emphasized that the term "comprises / comprising" when used in the this specification is taken to specify the presence of stated features, integers, steps, or components, but does not preclude the presence or addition of one or more other features, integers, steps, components, or groups thereof.

No element, act, or instruction used in the description of the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method, performed in a system comprising a source node serving user equipment (UE) and a target node, the method comprising:
determining (710) that a handover is to be initiated;
identifying (725), in response to receiving a handover request message at the target node, current network information for the target node;
sending (735) a handover response message to the source node, the handover response message including the generated handover feedback information; and
performing (745-760) a handover-related action, in response to receiving the handover response message at the source node, based on the generated handover feedback information,
the method is **characterized by** further comprising:
maintaining (705) radio resource management (RRM) information about the actual resource requirements by gathering current activity and resource usage information about the UE served by the source node;
sending (715) the handover request message to the target node, the handover request message including the RRM information; and
generating (730) handover feedback information for the UE based on the RRM information and the identified current network information for the target node.

2. The method of claim 1, where the RRM information includes one or more of:
UE specific information (520), or
radio bearer specific information (550).

3. The method of claim 2, where the UE specific information includes at least one of:
information relating to a current activity level of the UE,
information relating to radio resource usage of the UE, or
information relating to a quality of service of the UE.

4. The method of claim 2, where the radio bearer specific information includes at least one of:
information relating to a current activity level of a radio bearer,
information relating to radio resource usage of the radio bearer, or
information relating to a quality of service provided by the radio bearer.

5. The method of claim 1, where the source node serves the UE via at least one of:
non-Guaranteed Bit Rate radio bearers, or
Guaranteed Bit Rate radio bearers for which a maximum bit rate is greater than a Guaranteed Bit Rate, and
where the maintaining RRM information includes:
maintaining RRM information relating to the at least one of the non-Guaranteed Bit Rate radio bearers or the Guaranteed Bit Rate radio bearers for which a maximum bit rate is greater than a Guaranteed Bit Rate.

6. The method of claim 1, where the system further includes a Mobility Management Entity (MME) (132-1), and
where the sending a handover request message and the sending a handover response message are performed by the MME over a S 1 interface.

7. The method of claim 1, where the handover response message includes one of a HANDOVER REQUEST ACKNOWLEDGE message that includes a first Information Element or a HANDOVER PREPARATION FAILURE message that includes a second Information Element, the first Information Element and the second information element including the generated handover feedback information.

8. The method of claim 1, where the handover response message includes a HANDOVER REQUEST ACKNOWLEDGE message that includes a Target evolved Node B to Source evolved Node B Transparent Container, the Target evolved Node B to Source evolved Node B Transparent Container including the generated handover feedback information.

9. The method of claim 1, where the generated handover feedback information includes at least one of:
an indication that the target node is unable to support a same activity level as the source node for the UE,
an indication that a specific radio bearer receives less radio resources than provided by the source node, or
an indication of an activity level that the target node is able to support.

10. The method of claim 1, where the performing a handover-related action includes at least one of:
sending (745) a first command to cause the UE to begin communications with a different target node,
modifying (750) a scheduling strategy used by the UE to match a scheduling strategy used by the target node,
sending (755) a second command to cause the UE to reconfigure an ongoing service, or
sending (760) a third command to warn the UE of a degradation of service upon handover to the target node.

11. A system comprising:
a source node (122-1) adapted to:
determine that a handover is to be initiated for user equipment (UE), and
a target node (122-2) adapted to:
receive a handover request message from the source node, identify, in response to receiving the handover request message, current network information for the target node, and
send a handover response message to the source node, the handover response message including the generated handover feedback information, the generated handover feedback information assisting the source node in making a decision regarding the handover,
the system is **characterized in that**:
the source node (122-1) further is adapted to:
collect radio resource management (RRM) information about the actual resource requirements by gathering current activity and resource usage information about the UE served by the source node,
send, in response to the determination that a handover is to be initiated, the handover request message that includes the RRM information, and **in that**
the target node (122-2) further is adapted to:
generate handover feedback information for the UE based on the RRM information and the identified current network information.

12. A source evolved Node B (eNB) (122-1), which source eNB (122-1) and a target eNB (122-2) are comprised in a network, the source eNB comprising:
processing logic (434) to:
determine that a handover is to be initiated for the UE,
the source eNB is **characterized by** further comprising:
a memory (432) to store radio resource management (RRM) information about the actual resource requirements comprising current activity and resource usage information for at least one of user equipment (UE) associated with the source eNB or a radio bearer with which the UE is associated;
the processing logic (434) further being adapted to:
create, in response to determining that a handover is to be initiated for the UE, a HANDOVER REQUEST message that includes the stored RRM information;
send the HANDOVER REQUEST message to the target eNB over the X2 interface;
receive, in response to sending the HANDOVER REQUEST message to the target eNB, one of a HANDOVER REQUEST ACKNOWLEDGE message or a HANDOVER PREPARATION FAILURE message via the X2 interface, the one of a HANDOVER REQUEST ACKNOWLEDGE message or a HANDOVER PREPARATION FAILURE message including RRM information for assisting the source eNB in making a handover decision for the UE; and
make the handover decision for the UE based on the RRM information included in the one of a HANDOVER REQUEST ACKNOWLEDGE message or a HANDOVER PREPARATION FAILURE message.

13. A target Node B (eNB) (122-2), which target eNB (122-2) and a source eNB (122-1) are comprised in a network, the target eNB comprising:
a memory (432) to store instructions; and
processing logic (434) to execute the instructions to:
identify, in response to receiving the HANDOVER REQUEST message, current resource utilization of the target eNB; and
send one of a HANDOVER REQUEST ACKNOWLEDGE message or a HANDOVER PREPARATION FAILURE message to the source eNB, the one of a HANDOVER REQUEST ACKNOWLEDGE message or a HANDOVER PREPARATION FAILURE message including the generated handover feedback information, the generated handover feedback information enabling the source eNB in making a handover decision for the UE;
the target eNB is **characterized by**:
the processing logic (434) further being adapted to
receive a HANDOVER REQUEST message, relating to user equipment (UE), from the source eNB, the HANDOVER REQUEST message including radio resource management (RRM) information about the actual resource requirements comprising current activity and resource usage information relating to the UE; and
generate handover feedback information based on the RRM information and the identified current resource utilization of the target eNB.

14. A management entity (132-1) in a network that includes a source node (122-1) and a target node (122-2), the management entity comprising:
a memory (612) to store instructions; and
the management entity is **characterized by** that it further comprises processing logic (614) to execute the instructions to:
send a handover request message to the target node, the handover request message including radio resource management (RRM) information about the actual resource requirements comprising current activity and resource usage information relating to user equipment (UE) for which a handover to the target node is being initiated;
receive, in response to sending the handover request message to the target node, a handover response message from the target node, the handover response message including prediction information, indicating a likelihood that the target node will be able to provide a same quality of service to the UE as the source node is providing;
create a handover command including the prediction information; and provide the handover command to the source node, the handover command including the prediction information.

15. A method for assisting handover in a system comprising a source node, serving user equipment (UE) running at least one best effort or elastic application, and a target node, the method comprising, in the source node:
determining (710) that a handover is to be initiated;
receiving (740) a handover response message from the target node, the handover response message including handover feedback information relating to the UE; and
performing (745-760) a handover-related action, in response to receiving the handover response message, based on the handover feedback information,
the method is **characterized by** further comprising in the source node:
maintaining (705) radio resource management (RRM) information about the actual resource requirements by gathering current activity and resource usage information about individual UEs served by the source node; and
sending (715) a handover request message to the target node, the handover request message including the RRM information.

16. A method for assisting handover in a system comprising a source node, serving user equipment (UE) running at least one best effort or elastic application, and a target node, the method comprising, in the target node:
identifying (725), in response to receiving the handover request message, current network information for the target node; and
sending (735) a handover response message to the source node, the handover response message including the generated handover feedback information,
the method is **characterized by** further comprising in the target node:
receiving (720) a handover request message from the source node, the handover request message including radio resource management (RRM) information about the actual resource requirements comprising current activity and resource usage information relating to user equipment (UE) for which a handover to the target node is being initiated; and
generating (730) handover feedback information for the UE based on the RRM information and the identified current network information.

## Patentansprüche

1. Verfahren, das in einem System durchgeführt wird, das einen Ursprungsknoten, der eine Benutzereinrichtung (UE) versorgt, und einen Zielknoten umfasst, wobei das Verfahren umfasst:
Bestimmen (710), das ein Handover eingeleitet werden soll;
Identifizieren (725) als Reaktion auf den Empfang einer Handover-Anforderungsnachricht am Zielknoten von aktuellen Netzinformationen für den Zielknoten;
Senden (735) einer Handover-Antwortnachricht an den Ursprungsknoten, wobei die Handover-Antwortnachricht die erzeugten Handover-Feedbackinformationen umfasst;
und
Durchführen (745 - 760) einer Handover-bezogenen Aktion als Reaktion auf den Empfang der Handover-Antwortnachricht am Ursprungsknoten basierend auf den erzeugten Handover-Feedbackinformationen,
wobei das Verfahren ferner **gekennzeichnet ist durch**:
Pflegen (705) von Funkbetriebsmittelverwaltungs (RRM)-Informationen über die tatsächlichen Betriebsmittelanforderungen **durch** Sammeln von aktuellen Aktivitäts- und Betriebsmittelnutzungsinformationen über die vom Ursprungsknoten versorgte UE;
Senden (715) der Handover-Anforderungsnachricht an den Zielknoten, wobei die Handover-Anforderungsnachricht die RRM-Informationen umfasst; und
Erzeugen (730) von Handover-Feedbackinformationen für die UE basierend auf den RRM-Informationen und den identifizierten aktuellen Netzinformationen für den Zielknoten.

2. Verfahren nach Anspruch 1, wobei die RRM-Informationen eines oder mehreres von Folgendem umfassen:
UE-spezifischen Informationen (520) oder
Funkträger-spezifischen Informationen (550).

3. Verfahren nach Anspruch 2, wobei die UE-spezifischen Informationen mindestens eines von Folgendem umfassen:
Informationen in Bezug auf ein aktuelles Aktivitätsniveau der UE,
Informationen in Bezug auf Funkbetriebsmittelnutzung der UE oder
Informationen in Bezug auf eine Dienstgüte der UE.

4. Verfahren nach Anspruch 2, wobei die Funkträger-spezifischen Informationen mindestens eines von Folgendem umfassen:
Informationen in Bezug auf ein aktuelles Aktivitätsniveau eines Funkträgers,
Informationen in Bezug auf Funkbetriebsmittelnutzung des Funkträgers oder
Informationen in Bezug auf eine vom Funkträger bereitgestellte Dienstgüte.

5. Verfahren nach Anspruch 1, wobei der Ursprungsknoten die UE über mindestens eines von Folgendem versorgt:
Funkträgern mit nicht zugesicherter Bitrate oder
Funkträgern mit zugesicherter Bitrate, für welche eine maximale Bitrate größer als eine zugesicherte Bitrate ist, und
wobei das Pflegen von RRM-Informationen umfasst:
Pflegen von RRM-Informationen in Bezug auf mindestens eines von den Funkträgern mit nicht zugesicherter Bitrate oder den Funkträgern mit zugesicherter Bitrate, für welche eine maximale Bitrate größer als eine zugesicherte Bitrate ist.

6. Verfahren nach Anspruch 1, wobei das System ferner eine Mobilitätsverwaltungsinstanz (MME) (132-1) umfasst, und
wobei das Senden der Handover-Anforderungsnachricht und das Senden der Handover-Antwortnachricht durch die MME über eine S1-Schnittstelle erfolgt.

7. Verfahren nach Anspruch 1, wobei die Handover-Antwortnachricht eine von einer HANDOVER REQUEST ACKNOWLEDGE-Nachricht, die ein erstes Informationselement umfasst, oder einer HANDOVER PREPARATION FAILURE-Nachricht umfasst, die ein zweites Informationselement umfasst, wobei das erste Informationselement und das zweite Informationselement die erzeugten Handover-Feedback-Informationen umfassen.

8. Verfahren nach Anspruch 1, wobei die Handover-Antwortnachricht eine HANDOVER REQUEST ACKNOWLEDGE-Nachricht umfasst, die einen transparenten Evolvierter-Zielknoten-B-zu-evolviertem-Ursprungskoten-B-Container umfasst, wobei der transparente Evolvierter-Zielknoten-B-zu-evolviertem-Ursprungskoten-B-Container die erzeugten Handover-Feedbackinformationen umfasst.

9. Verfahren nach Anspruch 1, wobei die erzeugten Handover-Feedbackinformationen mindestens eines von Folgendem umfassen:
einer Angabe, dass der Zielknoten nicht in der Lage ist, ein gleiches Aktivitätsniveau wie der Ursprungsknoten für die UE zu unterstützen,
einer Angabe, dass ein spezifischer Funkträger weniger als die durch den Ursprungsknoten bereitgestellten Betriebsmittel empfängt, oder
einer Angabe eines Aktivitätsniveaus, das der 2ielknoten zu unterstützen in der Lage ist.

10. Verfahren nach Anspruch 1, wobei das Durchführen einer Handover-bezogenen Aktion mindestens eines von Folgendem umfassen:
Senden (745) eines ersten Befehls, um die UE zu veranlassen, Kommunikationen mit einem anderen Zielknoten zu beginnen,
derartiges Modifizieren (750) einer von der UE verwendeten Dispositionsstrategie, dass sie mit einer vom Zielknoten verwendete Dispositionsstrategie übereinstimmt,
Senden (755) eines zweiten Befehls, um die UE zu veranlassen, einen bestehenden Dienst neu zu konfigurieren, oder
Senden (760) eines dritten Befehls, um die UE vor einer Verschlechterung des Dienstes bei Handover zum Zielknoten zu warnen.

11. System, umfassend:
einen Steuerknoten (122-1), der ausgelegt ist zum:
Bestimmen, dass ein Handover für eine Benutzereinrichtung (UE) eingeleitet werden soll, und
einen Zielknoten (122-2), der ausgelegt ist zum:
Empfangen einer Handover-Anforderungsnachricht vom Ursprungsknoten,
Identifizieren als Reaktion auf den Empfang der Handover-Anforderungsnachricht von aktuellen Netzinformationen für den Zielknoten und
Senden einer Handover-Antwortnachricht an den Ursprungsknoten, wobei die Handover-Antwortnachricht die erzeugten Handover-Feedbacknachrichten umfasst, wobei die erzeugten Handover-Feedbacknachrichten den Ursprungsknoten beim Treffen einer Entscheidung bezüglich des Handovers unterstützen,
wobei das System **dadurch gekennzeichnet ist, dass**:
der Steuerknoten (122-1) ferner ausgelegt ist zum:
Erfassen von Funkbetriebsmittelverwaltungs (RRM)-Informationen über die tatsächlichen Betriebsmittelanforderungen durch Sammeln von aktuellen Aktivitäts- und Betriebsmittelnutzungsinformationen über die vom Ursprungsknoten versorgte UE;
Senden als Reaktion auf die Bestimmung, dass ein Handover eingeleitet werden soll, der Handover-Anforderungsnachricht, welche die RRM-Informationen umfasst, und dadurch, dass
der Zielknoten (122-2) ferner ausgelegt ist zum:
Erzeugen von Handover-Feedbackinformationen für die UE basierend auf den RRM-Informationen und den identifizierten aktuellen Netzinformationen.

12. Evolvierter Ursprungsknoten B (eNB) (122-1), wobei der Ursprungs-eNB (122-1) und ein Ziel-eNB (122-2) in einem Netz enthalten sind und der Ursprungs-eNB umfasst:
Verarbeitungslogik (434) zum:
Bestimmen, dass ein Handover für die UE eingeleitet werden soll,
wobei der Ursprungs-eNB **dadurch gekennzeichnet ist, dass** er ferner umfasst:
einen Speicher (432) zum Speichern von Funkbetriebsmittelverwaltungs (RRM)-Informationen über die tatsächlichen Betriebsmittelanforderungen, die aktuelle Aktivitäts- und Funkbetriebsmittelnutzungsinformationen für mindestens eines von einer Benutzereinrichtung (UE), die mit dem Ursprungs-eNB verbunden ist, oder einem Funkträger umfassen, mit dem die UE verbunden ist;
wobei die Verarbeitungslogik (434) ferner ausgelegt ist zum:
Erstellen als Reaktion auf das Bestimmen, dass ein Handover für die UE eingeleitet werden soll, einer HANDOVER REQUEST-Nachricht, welche die gespeicherten RRM-Informationen umfasst;
Senden der HANDOVER REQUEST-Nachricht über die X2-Schnittstelle an den Ziel-eNB;
Empfangen als Reaktion auf das Senden der HANDOVER REQUEST-Nachricht an den Ziel-eNB einer HANDOVER REQUEST ACKNOWLEDGE-Nachricht oder einer HANDOVER PREPARATION FAILURE-Nachricht über die X2-Schnittstelle, wobei die eine von einer HANDOVER REQUEST ACKNOWLEDGE-Nachricht oder einer HANDOVER PREPARATION FAILURE-Nachricht RRM-Informationen umfasst, um den Ursprungs-eNB beim Treffen einer Handover-Entscheidung für die UE zu unterstützen; und
Treffen der Handover-Entscheidung für die UE basierend auf den RRM-Informationen, die in der einen von einer HANDOVER REQUEST ACKNOWLEDGE-Nachricht oder einer HANDOVER PREPARATION FAILURE-Nachricht enthalten sind.

13. Evolvierter Zielknoten B (eNB) (122-2), wobei der Ziel-eNB (122-2) und ein Ursprungs-eNB (122-1) in einem Netz enthalten sind und der Ziel-eNB umfasst:
einen Speicher (432) zum Speichern von Anweisungen; und
Verarbeitungslogik (434) zum Ausführen der Anweisungen zum:
Identifizieren als Reaktion auf den Empfang der HANDOVER REQUEST-Nachricht einer aktuellen Betriebsmittelnutzung des Ziel-eNBs; und
Senden einer von einer HANDOVER REQUEST ACKNOWLEDGE-Nachricht oder einer HANDOVER PREPARATION FAILURE-Nachricht an den Ursprungs-eNB, wobei die eine von einer HANDOVER REQUEST ACKNOWLEDGE-Nachricht oder einer HANDOVER PREPARATION FAILURE-Nachricht die erzeugten Handover-Feedbackinformationen umfasst, wobei die erzeugten Handover-Feedbackinformationen den Ursprungs-eNB zum Treffen einer Handover-Entscheidung für die UE befähigen;
wobei der Ziel-eNB **dadurch gekennzeichnet ist, dass**:
die Verarbeitungslogik (434) ferner ausgelegt ist zum:
Empfangen einer HANDOVER REQUEST-Nachricht in Bezug auf eine Benutzereinrichtung (UE) vom Ursprungs-eNB, wobei die HANDOVER REQUEST-Nachricht Funkbetriebsmittelverwaltungs (RRM)-Informationen über die tatsächlichen Betriebsmittelanforderungen umfasst, die aktuelle Aktivitäts- und Betriebsmittelnutzungsinformationen in Bezug auf die UE umfassen; und
Erzeugen von Handover-Feedbackinformationen basierend auf den RRM-Informationen und der identifizierten aktuellen Betriebsmittelnutzung des Ziel-eNBs.

14. Verwaltungsinstanz (132-1) in einem Netz, das einen Ursprungsknoten (122-1) und einen Zielknoten (122-2) umfasst, wobei die Verwaltungsinstanz umfasst:
einen Speicher (612) zum Speichern von Anweisungen;
und
wobei die Verwaltungsinstanz **dadurch gekennzeichnet ist, dass** sie ferner umfasst:
Verarbeitungslogik (614) zum Ausführen der Anweisungen zum:
Senden einer Handover-Anforderungsnachricht an den Zielknoten, wobei die Handover-Anforderungsnachricht Funkbetriebsmittelverwaltungs (RRM)-Informationen über die tatsächlichen Betriebsmittelanforderungen umfasst, die aktuelle Aktivitäts- und Betriebsmittelnutzungsinformationen in Bezug auf eine Benutzereinrichtung (UE) umfassen, für welche ein Handover zum Zielknoten eingeleitet wird;
Empfangen als Antwort auf das Senden der Handover-Anforderungsnachricht an den Zielknoten einer Handover-Antwortnachricht vom Zielknoten, wobei die Handover-Antwortnachricht Prädiktionsinformationen umfasst, die eine Wahrscheinlichkeit angeben, dass der Zielknoten in der Lage ist, eine gleiche Dienstgüte für die UE bereitzustellen, wie sie der Ursprungsknoten bereitstellt;
Erstellen eines Handover-Befehls, der die Prädiktionsinformationen umfasst; und
Liefern des Handover-Befehls an den Ursprungsknoten, wobei der Handover-Befehl die Prädiktionsinformationen umfasst.

15. Verfahren zum Unterstützen eines Handovers in einem System, das einen Ursprungsknoten, der eine Benutzereinrichtung (UE) versorgt, die mindestens eine Best Effort- oder elastische Anwendung ausführt, und einen Zielknoten umfasst, wobei das Verfahren im Ursprungsknoten umfasst:
Bestimmen (710), das ein Handover eingeleitet werden soll;
Empfangen (740) einer Handover-Antwortnachricht vom Zielknoten, wobei die Handover-Antwortnachricht Handover-Feedbackinformationen in Bezug auf die UE umfasst; und
Durchführen (745 - 760) einer Handover-bezogenen Aktion als Reaktion auf den Empfang der Handover-Antwortnachricht basierend auf den Handover-Feedbackinformationen,
wobei das Verfahren **dadurch gekennzeichnet ist, dass** es im Ursprungsknoten ferner umfasst:
Pflegen (705) von Funkbetriebsmittelverwaltungs (RRM)-Informationen über die tatsächlichen Betriebsmittelanforderungen durch Sammeln von aktuellen Aktivitäts- und Betriebsmittelnutzungsinformationen über die einzelnen vom Ursprungsknoten versorgte UEs; und
Senden (715) einer Handover-Anforderungsnachricht an den Zielknoten, wobei die Handover-Anforderungsnachricht die RRM-Informationen umfasst.

16. Verfahren zum Unterstützen eines Handovers in einem System, das einen Ursprungsknoten, der eine Benutzereinrichtung (UE) versorgt, die mindestens eine Best Effort- oder elastische Anwendung ausführt, und einen Zielknoten umfasst, wobei das Verfahren im Zielknoten umfasst:
Identifizieren (725) als Reaktion auf den Empfang der Handover-Anforderungsnachricht von aktuellen Netzinformationen für den Zielknoten; und
Senden (735) einer Handover-Antwortnachricht an den Ursprungsknoten, wobei die Handover-Antwortnachricht die erzeugten Handover-Feedbackinformationen umfasst,
wobei das Verfahren **dadurch gekennzeichnet ist, dass** es im Zielknoten ferner umfasst:
Empfangen (720) einer Handover-Anforderungsnachricht vom Ursprungsknoten, wobei die Handover-Anforderungsnachricht Funkbetriebsmittelverwaltungs (RRM)-Informationen über die tatsächlichen Betriebsmittelanforderungen umfasst, die aktuelle Aktivitäts- und Betriebsmittelnutzungsinformationen in Bezug auf eine Benutzereinrichtung (UE) umfassen, für welche ein Handover zum Zielknoten eingeleitet wird;
und
Erzeugen (730) von Handover-Feedbackinformationen für die UE basierend auf den RRM-Informationen und den identifizierten aktuellen Netzinformationen.

## Revendications

1. Procédé, mis en oeuvre dans un système comprenant un noeud source desservant un équipement d'utilisateur (UE) et un noeud cible, le procédé comprenant de :
déterminer (710) qu'un transfert intercellulaire doit être amorcé ;
identifier (725), en réponse à la réception d'un message de demande de transfert intercellulaire au niveau du noeud cible, une information de réseau actuel pour le noeud cible ;
envoyer (735) un message de réponse de transfert intercellulaire au noeud source, le message de réponse de transfert intercellulaire incluant l'information de retour d'information au transfert intercellulaire généré ; et
effectuer (745-760) une action relative au transfert intercellulaire, en réponse à la réception du message de réponse de transfert intercellulaire au niveau du noeud source, sur la base de l'information de retour d'information au transfert intercellulaire généré,
le procédé est **caractérisé en ce qu'**il comprend en outre de :
conserver (705) une information de gestion de ressources radio (RRM) relative aux exigences de ressources effectives en collectant une information d'activité et d'utilisation de ressources actuelle relative à l'UE desservi par le noeud source ;
envoyer (715) le message de demande de transfert intercellulaire au noeud cible, le message de demande de transfert intercellulaire incluant l'information RRM ; et
générer (730) une information de retour d'information au transfert intercellulaire pour l'UE sur la base de l'information RRM et de l'information de réseau actuel identifié pour le noeud cible.

2. Procédé selon la revendication 1, dans lequel l'information RRM inclut une ou plusieurs de :
une information spécifique à l'UE (520), ou
une information spécifique au support radio (550).

3. Procédé selon la revendication 2, dans lequel l'information spécifique à l'UE inclut au moins une de :
une information relative à un niveau d'activité actuel de l'UE,
une information relative à une utilisation de ressources radio de l'UE, ou
une information relative à une qualité de service de l'UE.

4. Procédé selon la revendication 2, dans lequel l'information spécifique au support radio inclut au moins une de :
une information relative à un niveau d'activité actuel d'un support radio,
une information relative à une utilisation de ressources radio du support radio, ou
une information relative à une qualité de service fournie par le support radio.

5. Procédé selon la revendication 1, dans lequel le noeud source dessert l'UE via au moins un de :
des supports radio à débit non garanti, ou
des supports radio à débit garanti pour lesquels un débit maximal est supérieur à un débit garanti, et
dans lequel la conservation de l'information RRM inclut de :
conserver une information RRM relative à au moins un des supports radio à débit non garanti ou des supports radio à débit garanti pour lesquels un débit maximal est supérieur à un débit garanti.

6. Procédé selon la revendication 1, dans lequel le système inclut en outre une entité de gestion de mobilité (MME)(132-1), et
dans lequel l'envoi d'un message de demande de transfert intercellulaire et l'envoi d'un message de réponse au transfert intercellulaire sont effectués par la MME via une interface S1.

7. Procédé selon la revendication 1, dans lequel le message de réponse de transfert intercellulaire inclut un d'un message HANDOVER REQUEST ACKNOWLEDGE (accusé de réception de demande de transfert) qui inclut un premier élément d'information ou un message HANDOVER PREPARATION FAILURE (échec de préparation de transfert) qui inclut un second élément d'information, le premier élément d'information et le second élément d'information incluant l'information de retour d'information au transfert intercellulaire généré.

8. Procédé selon la revendication 1, dans lequel le message de réponse au transfert intercellulaire inclut un message HANDOVER REQUEST ACKNOWLEDGE (accusé de réception de demande de transfert) qui inclut un conteneur transparent du noeud B évolué cible au noeud B évolué source, le conteneur transparent du noeud B évolué cible au noeud B évolué source incluant l'information de retour d'information au transfert intercellulaire généré.

9. Procédé selon la revendication 1, dans lequel l'information de retour d'information au transfert intercellulaire généré inclut au moins une de :
une indication que le noeud cible est incapable de prendre en charge un même niveau d'activité que le noeud source pour l'UE,
une indication qu'un support radio spécifique reçoit moins de ressources radio que prévu par le noeud source, ou
une indication d'un niveau d'activité que le noeud cible est capable de prendre en charge.

10. Procédé selon la revendication 1, dans lequel la mise en oeuvre d'une action relative à un transfert intercellulaire inclut au moins un de :
envoyer (745) une première commande pour amener l'UE à commencer des communications avec un noeud cible différent,
modifier (750) une stratégie de programmation utilisée par l'UE pour concorder avec une stratégie de programmation utilisée par le noeud cible,
envoyer (755) une seconde commande pour amener l'UE à reconfigurer un service en cours, ou
envoyer (760) une troisième commande pour alerter l'UE d'une dégradation de service lors d'un transfert intercellulaire vers le noeud cible.

11. Système comprenant :
un noeud source (122-1) adapté afin de :
déterminer qu'un transfert intercellulaire doit être amorcé pour un équipement d'utilisateur (UE), et
un noeud cible (122-2) adapté afin de :
recevoir un message de demande de transfert intercellulaire provenant du noeud source,
identifier, en réponse à la réception du message de demande de transfert intercellulaire, d'une information de réseau actuelle pour le noeud cible, et
envoyer un message de réponse de transfert intercellulaire au noeud source, le message de réponse de transfert intercellulaire incluant l'information de retour d'information au transfert intercellulaire généré, l'information de retour d'information au transfert intercellulaire généré assistant le noeud source dans la prise d'une décision concernant le transfert intercellulaire,
le système est **caractérisé en ce que** le noeud source (122-1) est en outre adapté afin de :
collecter une information de gestion de ressources radio (RRM) relative aux exigences de ressources actuelles en collectant une information d'activité et d'utilisation de ressource actuelle relative à l'UE desservi par le noeud source,
envoyer, en réponse à la détermination qu'un transfert intercellulaire doit être amorcé, le message de demande de transfert intercellulaire qui inclut l'information RRM, et **en ce que**
le noeud cible (122-2) est en outre adapté afin de ;
générer une information de retour d'information au transfert intercellulaire pour l'UE sur la base de l'information RRM et de l'information de réseau actuelle identifiée.

12. Noeud B évolué source (eNB)(122-1), lequel eNB source (122-1) et un eNB cible (122-2) sont compris dans un réseau, le eNB source comprenant :
une logique de traitement (434) pour :
déterminer qu'un transfert intercellulaire doit être amorcé pour l'UE,
l'eNB source est **caractérisé en ce qu'**il comprend en outre :
une mémoire (432) pour mémoriser une information de gestion de ressource radio (RRM) relative aux exigences de ressources effectives comprenant une information d'activité et d'utilisation de ressources actuelle pour au moins un d'un équipement d'utilisateur (UE) associé à l'eNB source ou un support radio auquel l'UE est associé ;
la logique de traitement (434) étant en outre adaptée afin de :
créer, en réponse à la détermination qu'un transfert intercellulaire doit être amorcé pour l'UE, un message HANDOVER REQUEST (demande de transfert) qui inclut l'information RRM mémorisée ;
envoyer le message HANDOVER REQUEST à l'eNB cible via l'interface X2 ;
recevoir, en réponse à l'envoi du message HANDOVER REQUEST à l'eNB cible, un d'un message HANDOVER REQUEST ACKNOWLEDGE ou d'un message HANDOVER PREPARATIONF AILURE via l'interface X2, le message HANDOVER REQUEST ACKNOWLEDGE ou HANDOVER PREPARATION FAILURE incluant une information RRM pour assister l'eNB source à prendre une décision de transfert intercellulaire pour l'UE ; et
prendre la décision de transfert intercellulaire pour l'UE sur la base de l'information RRM incluse dans un d'un message HANDOVER REQUEST ACKNOWLEDGE ou un message HANDOVER PREPARATION FAILURE.

13. Noeud B cible (eNB) (122-2), lequel eNB cible (122-2) et un eNB source (122-1) sont compris dans un réseau, l'eNB cible comprenant :
une mémoire (432) pour mémoriser des instructions ; et
une logique de traitement (434) pour exécuter les instructions afin de :
identifier, en réponse à la réception du message HANDOVER REQUEST, une utilisation de ressource actuelle de l'eNB cible ; et
envoyer un d'un message HANDOVER REQUEST ACKNOWLEDGE ou un message HANDOVER PREPARATION FAILURE à l'eNB source, le message HANDOVER REQUEST ACKNOWLEDGE ou le message HANDOVER PREPARATION FAILURE incluant l'information de retour d'information au transfert intercellulaire généré, l'information de retour d'information au transfert intercellulaire généré permettant à l'eNB source de prendre une décision de transfert intercellulaire pour l'UE ;
l'eNB cible est **caractérisé par** :
la logique de traitement (434) est en outre adaptée afin de :
recevoir un message HANDOVER REQUEST, relatif à l'équipement d'utilisateur (UE), provenant de l'eNB source, le message HANDOVER REQUEST incluant une information de gestion de ressource radio (RRM) concernant les exigences de ressources actuelles comprenant l'information d'activité et d'utilisation de ressource actuelle relative à l'UE ; et
générer une information de retour d'information au transfert intercellulaire sur la base de l'information RRM et de l'utilisation de ressources actuelle identifiée de l'eNB cible.

14. Entité de gestion (132-1) dans un réseau qui inclut un noeud source (122-1) et un noeud cible (122-2), l'entité de gestion comprenant :
une mémoire (612) pour mémoriser des instructions ; et
l'entité de gestion est **caractérisée en ce qu'**elle comprend en outre :
une logique de traitement (614) pour exécuter les instructions pour :
envoyer un message de demande de transfert intercellulaire au noeud cible, le message de demande de transfert intercellulaire incluant une information de gestion de ressource radio (RRM) concernant les exigences de ressources actuelle comprenant une information d'activité et d'utilisation de ressource actuelle relative à l'équipement d'utilisateur (UE) pour lequel un transfert intercellulaire vers le noeud cible doit être amorcé ;
recevoir, en réponse à l'envoi du message du demande de transfert intercellulaire au noeud cible, un message de réponse de transfert intercellulaire provenant du noeud cible, le message de réponse de transfert intercellulaire incluant une information de prédiction, incluant une probabilité que le noeud cible sera capable de fournir une même qualité de service à l'UE que celle fournie par le noeud source ;
créer une commande de transfert intercellulaire incluant l'information de prédiction ; et
fournir la commande de transfert intercellulaire au noeud source, la commande de transfert intercellulaire incluant l'information de prédiction.

15. Procédé d'assistance au transfert intercellulaire dans un système comprenant un noeud source, desservant un équipement d'utilisateur (UE) exécutant au moins une application élastique ou de meilleur effort, et un noeud cible, le procédé comprenant, dans le noeud source, de :
déterminer (710) qu'un transfert intercellulaire doit être amorcé ;
recevoir (740) un message de réponse de transfert intercellulaire provenant du noeud cible, le message de réponse de transfert intercellulaire incluant une information de retour d'information au transfert intercellulaire relative à l'UE ; et
effectuer (745-760) une action relative au transfert intercellulaire, en réponse à la réception du message de réponse de transfert intercellulaire, sur la base de l'information de retour d'information au transfert intercellulaire,
le procédé est **caractérisé en ce qu'**il comprend en outre dans le noeud source de :
conserver (705) une information de gestion de ressources radio (RRM) concernant les exigences de ressources effectives en collectant l'information d'activité et d'utilisation de ressource actuelle relative aux UEs individuelles desservies par le noeud source ; et
envoyer (715) un message de demande de transfert intercellulaire au noeud cible, le message de demande de transfert intercellulaire incluant l'information RRM.

16. Procédé d'assistance au transfert intercellulaire dans un système comprenant un noeud source, desservant un équipement d'utilisateur (UE) exécutant au moins une application élastique ou de meilleur effort, et un noeud cible, le procédé comprenant, dans le noeud cible, de :
identifier (725), en réponse à la réception du message de demande de transfert intercellulaire, une information de réseau actuelle pour le noeud cible ; et
envoyer (735) un message de réponse de transfert intercellulaire au noeud source, le message de réponse de transfert intercellulaire incluant l'information de retour d'information au transfert intercellulaire généré,
le procédé est **caractérisé en ce qu'**il comprend en outre dans le noeud cible de :
recevoir (720) un message de demande de transfert intercellulaire provenant du noeud source, le message de demande de transfert intercellulaire incluant une information de gestion de ressource radio (RRM) concernant les exigences de ressources effectives comprenant une information d'activité et d'utilisation de ressource actuelle relative à l'équipement d'utilisateur (UE) pour lequel un transfert intercellulaire vers le noeud cible doit être amorcé ;
et
générer (730) une information de retour d'information au transfert intercellulaire pour l'UE sur la base de l'information RRM et de l'information de réseau actuel identifié.
